# EUROPÄISCHE PATENTSCHRIFT

(11) **EP 4 311 087 B1**
(45) Veröffentlichungstag und Bekanntmachung des Hinweises auf die Patenterteilung: **17.07.2024**
(21) Anmeldenummer: 22202369.9
(22) Anmeldetag: 19.10.2022
(51) Int. Cl.: H02K 15/04

(54) **STAPELVERFAHREN ZUM STAPELN VON WELLENWICKLUNGSDRÄHTEN, MAGAZIN ZUR VERWENDUNG DARIN SOWIE VERWENDUNGEN DERSELBEN**
STACKING METHOD FOR STACKING WAVE WINDING WIRES, MAGAZINE FOR USE THEREIN AND USES THEREOF
PROCÉDÉ D'EMPILAGE POUR EMPILER DES FILS ENROULÉS SUR DES ARBRES, MAGASIN POUR UTILISATION DANS CE PROCÉDÉ ET UTILISATIONS DE CELUI-CI

(30) Priorität: 22.07.2022 DE 102022118399
(43) Veröffentlichungstag der Anmeldung: 24.01.2024
(73) Patentinhaber: Grob-Werke GmbH & Co. KG, 87719 Mindelheim (DE)
(72) Erfinder: Schretzenmaier, Georg, 89331 Burgau (DE); Schmölz, Markus, 87668 Rieden (DE); Rauscher, Ralf, 87748 Fellheim (DE)
(74) Vertreter: KASTEL Patentanwälte PartG mbB

(56) Entgegenhaltungen:
- EP-B1- 3 906 607
- US-A1- 2009 224 092
- US-A1- 2014 196 282
- US-A1- 2022 158 218

## Beschreibung

Die Erfindung betrifft ein Stapelverfahren zum Stapeln von Wellenwicklungsdrähten zum Bilden einer Wicklungsmatte für eine Spulenwicklung eines Stators. Weiter betrifft die Erfindung ein Herstellverfahren zum Herstellen einer Wicklungsmatte für eine Spulenwicklung eines Stators, wobei das Herstellverfahren Stapeln von Wellenwicklungsdrähten mit dem Stapelverfahren enthält. Weiter betrifft die Erfindung ein Magazin zur Verwendung in dem Stapelverfahren, eine Stapelvorrichtung zum Stapeln von Wellenwicklungsdrähten mit wenigstens einem solchen Magazin, eine Steuerung und ein Computerprogramm für eine solche Stapelvorrichtung sowie eine Herstellvorrichtung zum Herstellen einer Wellenwicklungsmatte, die mit einer solchen Stapelvorrichtung versehen ist.

Zur Begriffsdefinition und zum technologischen Hintergrund wird auf folgende Literaturstellen verwiesen:
[1] DE 11 2006 000 742 A1
[2] DE 11 2019 004 024 A1
[3] EP 2 219 284 A1
[4] WO 2019/166 061 A1
[5] DE 103 28 956 A1
[6] US 2009/0 322 178 A1
[7] DE 10 2020 130 647 A1
[8] WO 2019/020 148 A1
[9] WO 2018/019 970 A1
[10] US 2009/224092 A1
[11] EP 3 906 607 B1

Zur Herstellung eines Stators für eine elektrische Maschine ist es bekannt, zunächst eine Wicklungsmatte zum Bilden der Spulenwicklung für den Stator zu fertigen und anschließend in ein Blechpaket des Stators einzufügen, wie dies beispielsweise in der Literaturstelle [9] beschrieben und gezeigt ist. Eine Wicklungsmatte wird aus mehreren Einzeldrähten gebildet, bei denen geradlinige Drahtabschnitte, die in Statornuten eingefügt werden, durch dachförmig gebogene Abschnitte, die sogenannten Wicklungsköpfe, miteinander verbunden sind. Die Einzeldrähte sind aus einem Kern aus leitfähigem Metall, meist Kupfer, und einer außenseitigen Isolationsschicht gebildet. Um einen hohen Füllgrad zu erreichen, haben die Einzeldrähte oft einen im Wesentlichen rechteckförmigen Querschnitt.

Ein z.B. aus [8] bekanntes Herstellverfahren für solche aus einer Wicklungsmatte gebildete Spulenwicklung ist das sogenannte Schwertwickeln, bei dem die Einzeldrähte auf eine Schablone (Schwert) aufgewickelt werden, wodurch Wicklungsmatten mit spiralförmig gebogenen Drähten entstehen. Durch dieses Herstellverfahren weisen die Wicklungsköpfe eine Verdrillung auf. Die Drähte sind starken Verformungen unterworfen. Starke Verformungen können die Isolierung beeinträchtigen und den Platzbedarf für die Wicklungsköpfe erhöhen.

Die Literaturstelle [11] beschreibt ein weiteres Biegeverfahren zum Biegen von Drahtabschnitten für eine Wellenwicklungsmatte zum Bilden einer Spulenwicklung eines Bauteils einer elektrischen Maschine, wobei eine Drahtgruppe bereitgestellt wird und die Drähte der Drahtgruppe in eine Mäanderform gebogen werden.

Im Unterschied zur Schwertwicklung kann die Herstellung von Wicklungsmatten auch aus mehreren flach gebogenen Wellenwicklungsdrähten erfolgen, wie dies in den Literaturstellen [1] bis [7] und [10] beschrieben und gezeigt ist. Wie insbesondere in [4] definiert, sind Wellenwicklungsdrähte mäanderförmig gebogene Einzeldrähte. Die Wellenwicklungsdrähte können miteinander verflochten, verwebt, gesteckt oder gestapelt sein. Hierzu sind automatisierte Verfahren zum Verweben oder Verflechten der gebogenen Drähte zu einer Wellenwicklungsmatte bekannt.

Die Literarturstelle [3] beschreibt ein Verfahren, bei dem die gebogenen Drähte zueinander positioniert und anschließend schrittweise durch Drehbewegungen der einzelnen Drähte miteinander verwebt werden. Bei der Literaturstelle [10] werden die gebogenen Drähte miteinander verflochten.

Die Literaturstelle [2] offenbart ein Verfahren, bei dem die Leiter abschnittsweise umgebogen werden, sodass ein zweiter Leiter aufgelegt werden kann und durch Zurückbiegen des ersten Leiters ein Leiterpaar gebildet wird.

Ein Verfahren zum Stecken der Wicklungsdrähte wird in der Literaturstelle [4] beschrieben, hierbei werden zwei gebogene Wellenwicklungsdrähte so zueinander positioniert, dass sie ineinandergeschoben werden können, indem die Wellenwicklungsdrähte abschnittsweise über oder unter dem jeweils anderen Draht angeordnet werden.

In der [5] wird unter anderem eine Vorrichtung beschrieben, bei der ein einzelner Wellenwicklungsdraht mit einem endlosen Transportriemen befördert wird, um anschließend durch anheben und absenken von Führungsschienen in einer weiteren Aufnahme eingelegt zu werden.

In der Literaturstelle [6] wird eine durch Stapeln hergestellte Wellenwicklungsmatte gezeigt.

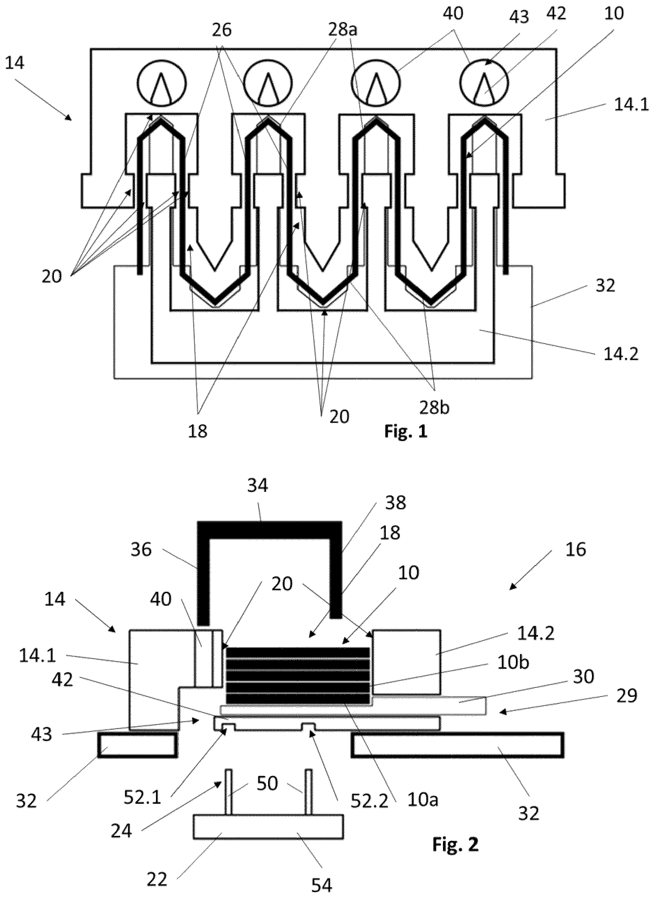

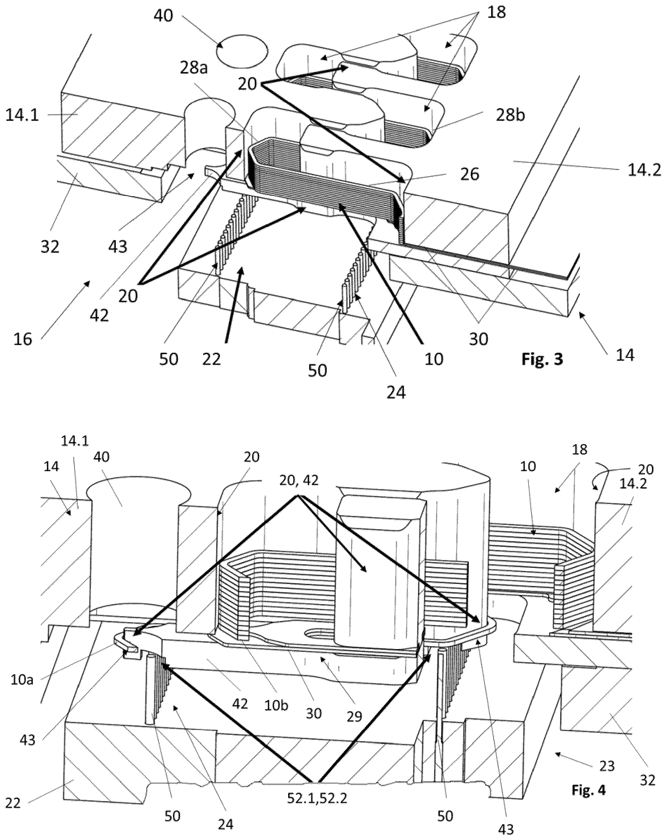

Die Erfindung liegt auf dem Gebiet der Herstellung einer Wellenwicklungsmatte aus mäanderförmig gebogenen Einzeldrähten (=Wellenwicklungsdrähte) zur Herstellung einer Spulenwicklung einer elektrischen Maschine. Die üblicherweise als lineare Spule vorgefertigte Wellenwicklung kann dabei verschiedene Kopfausbildungen besitzen. Die Drahtmatte kann nun aus beispielsweise sechs Drähten mit gleichem Kopf, oder auch mit einem zusätzlichen Tausch zwischen zwei parallelen Leitern im Kopf aufgebaut sein, wie dies z.B. in der [1], Fig. 2 und 4 gezeigt ist. Auch kann eine Drahtmatte (=Wellenwicklungsmatte) aus mehreren unterschiedlich gebogenen Drähten, mit unterschiedlicher Geometrie zusammengesetzt werden, siehe z.B. [2], Fig. 4.

Je nach Füllgrad und Effizienz der E-Maschine oder des Generators kann jede Wellenwicklungsmatte ihre eigene Stapelreihenfolge aus unterschiedlichen Einzeldrähten haben, wie dies insbesondere in der Literaturstelle [7] beschrieben und gezeigt ist.

Die Erfindung hat sich zur Aufgabe gestellt, Verfahren und Vorrichtungen zur Verfügung zu stellen, mit denen sich unterschiedliche Wellenwicklungsmatten aus Wellenwicklungsdrähte automatisiert und zuverlässig herstellen lassen.

Zum Lösen dieser Aufgabe schafft die Erfindung ein Stapelverfahren nach Anspruch 1. Ein Herstellverfahren für eine Spulenwicklung unter Einsatz eines solchen Stapelverfahrens, ein in dem Stapelverfahren verwendbares Magazin, eine diese verwendende Stapelvorrichtung, eine Steuerung und ein Computerprogramm hierfür sowie eine Herstellvorrichtung für eine Spulenwicklung sind Gegenstand der Nebenansprüche.

Vorteilhafte Ausgestaltungen sind Gegenstand der Unteransprüche.

Die Erfindung schafft gemäß einem Aspekt davon ein Stapelverfahren zum Stapeln von Wellenwicklungsdrähten zum Bilden einer Wicklungsmatte für eine Spulenwicklung eines Stators, wobei das Stapelverfahren die Schritte umfasst:
Bereitstellen wenigstens eines Magazins, das mehrere gleichartige Wellenwicklungsdrähte in einem Aufnahmeraum enthält, wobei das Magazin als Fallmagazin ausgebildet ist, so dass sich der Aufnahmeraum mit zumindest einer Richtungskomponente in vertikaler Richtung durch das Magazin erstreckt, wobei die Kontur des Aufnahmeraums an die aufgenommenen Wellenwicklungsdrähte angepasst ist, so dass die Wellenwicklungsdrähte an mehreren Führungen an unterschiedlichen Stellen der Begrenzung des Aufnahmeraums positioniert und durch den Aufnahmeraum geführt werden, ohne ihre Geometrie zu verändern,
Positionieren eines Werkstückträgers, der mit einer Haltestruktur für eine aus mehreren gestapelten Wellenwicklungsdrähten gebildete Wicklungsmatte versehen ist, in einer ersten Übergabeposition unterhalb des wenigstens einen Magazins und Ablegen eines Wellenwicklungsdrahtes aus dem wenigstens einen Magazin auf einer ersten Position auf dem Werkstückträger,
Positionieren des Werkstückträgers in einer zu der ersten Übergabeposition versetzten zweiten Übergabeposition unterhalb des wenigstens einen Magazins und Ablegen eines weiteren Wellenwicklungsdrahtes aus dem wenigstens einen Magazin auf einer zu der ersten Position versetzten Position auf dem Werkstückträger.

Vorzugsweise umfasst das Stapelverfahren:
Bereitstellen mehrerer Magazine, die jeweils unterschiedliche geformte Wellenwicklungsdrähte mit jeweils daran angepassten Aufnahmeräumen enthalten,
Positionieren des Werkstückträgers an einem ersten der Magazine und Ablegen eines ersten Wellenwicklungsdrahtes aus dem ersten Magazin auf der ersten Position auf dem Werkstückträger und Positionieren des Werkstückträgers an einem zweiten der Magazine und Ablegen eines zweiten Wellenwicklungsdrahtes aus dem zweiten Magazin auf der zweiten Position auf dem Werkstückträger.

Es ist bevorzugt, dass das Ablegen den Schritt umfasst:
Vereinzeln des abzulegenden untersten Wellenwicklungsdrahtes des Magazins mittels einer Vereinzelungseinrichtung, die den abzulegenden Wellenwicklungsdraht von dem Aufnahmeraum zu einer Ablegeposition versetzt, wobei der Wellenwicklungsdraht beim Versetzen derart gehalten und/oder geführt wird, dass dessen Geometrie beibehalten wird.

Es ist bevorzugt, dass das Ablegen den Schritt umfasst:
Nachführen von Wellenwicklungsdrähten in dem Aufnahmeraum in vertikaler Richtung nach unten.

Es ist bevorzugt, dass das Ablegen den Schritt umfasst:
Führen der Wellenwicklungsdrähte in dem Aufnahmeraum, so dass die Geometrie beibehalten wird.

Es ist bevorzugt, dass das Ablegen den Schritt umfasst:
Auferlegen einer vertikalen Kraft auf die in dem Aufnahmeraum angeordneten Wellenwicklungsdrähte von oben, um die Wellenwicklungsdrähte nachzuführen und/oder in dem Aufnahmeraum in vertikaler Richtung zu positionieren und/oder gegen eine im unteren Bereich vorgesehene Ablage zu drücken.

Es ist bevorzugt, dass das Ablegen den Schritt umfasst:
Verwenden eines Schiebers, der quer zur Längsrichtung der Wellenwicklungsdrähte verschiebbar ist, als Ablage, um ein ungewolltes Herausfallen von Wellenwicklungsdrähten aus dem Aufnahmeraum zu vermeiden, und/oder als Vereinzelungseinrichtung.

Es ist bevorzugt, dass das Ablegen den Schritt umfasst:
Aktives Einschieben des abzulegenden Wellenwicklungsdrahtes in die Haltestrukturen durch in vertikaler Richtung bewegte Einschiebeelemente.

Es ist bevorzugt, dass das Positionieren den Schritt umfasst:
Positionieren der Haltestruktur in Querrichtung, die sich quer zur Längserstreckung der in dem Aufnahmeraum aufgenommen Wellenwicklungsdrähte erstreckt, an einer relativ zu dem Aufnahmeraum in Querrichtung versetzten Ablageposition.

Es ist bevorzugt, dass das Positionieren den Schritt umfasst:
Positionieren des Werkstückträgers in Längsrichtung, die sich in Richtung der Längserstreckung der in dem Aufnahmeraum aufgenommenen Wellenwicklungsdrähte erstreckt, an einer zu einer vorhergehenden Übergabeposition in Längsrichtung versetzten Übergabeposition.

Es ist bevorzugt, dass das Positionieren den Schritt umfasst:
Positionieren des Werkstückträgers in vertikaler Richtung in der Übergabeposition derart, dass die Haltestrukturen vertikal mit Führungen des Magazins überlappen.

Gemäß einem weiteren Aspekt schafft die Erfindung ein Herstellverfahren zum Herstellen einer Wicklungsmatte für eine Spulenwicklung eines Stators, umfassend Durchführen des Stapelverfahrens nach einer der voranstehenden Ausgestaltungen (auch in beliebiger Kombination miteinander) zum Erhalt eines Stapels aus Wellenwicklungsdrähten, wobei bei dem Stapel auf beiden Seiten Wicklungsköpfe angeordnet sind, und Prägen des Stapels auf dem Werkstückträger im Bereich der Wicklungsköpfe.

Gemäß einem weiteren Aspekt schafft die Erfindung ein Magazin zur Verwendung in dem Stapelverfahren nach einer der voranstehenden Ausgestaltungen, umfassend einen mäanderförmigen Aufnahmeraum für mehrere gleichartige Wellenwicklungsdrähte mit seitlichen Führungen zum passgenauen verspannungsfreien Führen und/oder seitlichen Positionieren der Wellenwicklungsdrähte, wobei der Aufnahmeraum sich zumindest mit einer Richtungskomponente vertikal durch das Magazin erstreckt;
eine Ablageführung zum Ablegen eines Wellenwicklungsdrahts an einer Ablageposition, die zu dem Aufnahmeraum in einer Querrichtung, die sich quer zu der Längserstreckung des mäanderförmigen Aufnahmeraums erstreckt, angeordnet ist, und eine Positioniereinrichtung zum Positionieren eines Werkstückträgers mit Haltestruktur in Querrichtung und in einer Längsrichtung.

Es ist bevorzugt, dass der Aufnahmeraum durch eine Begrenzung aus mehreren austauschbaren segmentierten Magazinteilen gebildet ist.

Vorzugsweise umfasst das Magazin weiter eine Vereinzelungseinrichtung zum seitlichen Versetzen des untersten Wellenwicklungsdrahtes von dem Aufnahmeraum zu der Ablageposition mit Führungen zur Beibehaltung der Geometrie des Wellenwicklungsdrahtes.

Vorzugsweise umfasst das Magazin weiter einen in Querrichtung hin- und her bewegbaren Schieber als Ablage zur Vermeidung eines Herausfallens der Wellenwicklungsdrähte aus dem Aufnahmeraum nach unten und/oder zum Vereinzeln des untersten Wellenwicklungsdrahtes durch seitliches Versetzen von dem Aufnahmeraum zu der Ablageposition.

Gemäß einem weiteren Aspekt schafft die Erfindung eine Stapelvorrichtung zum Durchführen des Stapelverfahrens nach einer der voranstehenden Ausgestaltungen, umfassend wenigstens ein Magazin nach einer der voranstehenden Ausgestaltungen,
wenigstens einen Werkstückträger mit einer Haltestruktur für den Stapel aus abgelegten Wellenwicklungsdrähten,
wenigstens eine Bewegungseinrichtung zum relativen Bewegen des Werkstückträgers und des wenigstens einen Magazins und
eine Steuerung, die dazu eingerichtet ist, die Stapelvorrichtung zum automatischen Durchführen des Stapelverfahrens nach einer der voranstehenden Ausgestaltungen anzusteuern.

Vorzugsweise weist die Stapelvorrichtung Einschiebeelemente zum aktiven Einschieben des abzulegenden Wellenwicklungsdrahtes in die Haltestruktur auf.

Vorzugsweise weist die Stapelvorrichtung einen Niederhalter zum Ausüben einer vertikalen Kraft auf die Wellenwicklungsdrähte in dem Aufnahmeraum auf.

Vorzugsweise umfasst die Stapelvorrichtung ein erstes Magazin, das gemäß einer der voranstehenden Ausgestaltungen ausgebildet ist, zur Aufnahme erster Wellenwicklungsdrähte und ein zweites Magazin, das vorzugsweise ebenfalls gemäß einer der voranstehenden Ausgestaltungen ausgebildet ist, mit einem unterschiedlich konturierten Aufnahmeraum zur Aufnahme von zu den ersten Wellenwicklungsdrähten unterschiedlichen zweiten Wellenwicklungsdrähten, wobei die Bewegungseinrichtung dazu ausgebildet ist, den Werkstückträger zwischen Ablagepositionen des ersten und zweiten Magazins - vorzugsweise, aber nicht zwingend, unter unterschiedlicher Versetzung in Längsrichtung - zu bewegen.

Bei Ausführungsformen der Verfahren und der Vorrichtung gemäß der Erfindung können - insbesondere bei unterschiedlich gestalteten Wellenwicklungsdrähten - diese auch auf der gleichen Position auf dem Werkstückträger aufeinander gestapelt werden.

Gemäß einem weiteren Aspekt schafft die Erfindung eine Steuerung für eine Stapelvorrichtung nach einer der voranstehenden Ausgestaltungen, wobei die Steuerung dazu ausgebildet ist, die Stapelvorrichtung zum Durchführen des Stapelverfahrens nach einer der voranstehenden Ausgestaltungen anzusteuern.

Gemäß einem weiteren Aspekt schafft die Erfindung ein Computerprogramm, enthaltend Steueranweisungen, die eine Stapelvorrichtung nach einer der voranstehenden Ausgestaltungen veranlassen, das Stapelverfahren nach einer der voranstehenden Ausgestaltungen durchzuführen.

Gemäß einem weiteren Aspekt schafft die Erfindung eine Herstellvorrichtung zum Herstellen einer Wicklungsmatte für eine Spulenwicklung eines Stators, umfassend eine Stapelvorrichtung nach einer der voranstehenden Ausgestaltungen und eine Presse, die dazu ausgebildet ist, Wicklungsköpfe eines auf dem Werkstückträger gebildeten Stapels von Wellenwicklungsdrähten auf dem Werkstückträger zu prägen.

Bevorzugte Ausführungsformen der Verfahren, Einrichtungen und Vorrichtungen gemäß der Erfindung betreffen oder ermöglichen eine form- und positionsgetreue Übergabe eines Wellenwicklungsdrahtes ohne Zwischenhandling.

Vorzugsweise sind automatisiert auch sehr unterschiedliche Wellenwicklungsmatten, auch mit Leitertausch wie aus [1] bekannt, mit unterschiedliche gebogenen Wellenwicklungsdrähten, wie aus [2] bekannt und/oder auch mit hinsichtlich Querschnitten unterschiedlichen Wellenwicklungsdrähten, wie aus [7] bekannt, sehr schonend durch Stapeln herstellbar. Vorzugsweise werden Verformungen und Verdrillungen und sonstige starke Belastungen der Einzeldrähte vermieden, so dass Risiken einer Beschädigung verringert sind.

Ein besonderer Vorzug der erfindungsgemäßen Ausgestaltungen ist, dass Drähte zu Matten gestapelt werden können, wobei sichergestellt ist, dass der bereits wellenförmig gebogene Draht während der Handhabung zuverlässig seine Form und Position beibehält.

Ausführungsformen der Erfindung ermöglichen es, mäanderförmig gebogene Drähte (=Wellenwicklungsdrähte) aufeinander zu stapeln und zueinander auszurichten. Das Stapeln kann dabei in unterschiedlichen Ausführungen geschehen, d.h. entweder einzeln aufeinander, oder als vorgruppierte Einzeldrähte. Auch die Wellenwicklungsdrähte selbst können die gleiche Kontur, oder aufgrund elektrischer Vorteile unterschiedliche Konturen haben, was das Handling deutlich erschwert. Die Ausrichtung zueinander ist vorgesehen, um die fertige Wellenwicklungsmatte auf einen entsprechenden Aufnehmer, z.B. einen Spanndorn mit engen Nuten, siehe [9], überführen zu können und sie dann in einen Stator oder Rotor zu fügen.

Bei der Herstellung eines einzelnen Wellenwicklungsdrahtes entstehen Eigenspannungen, die ähnlich einer Feder, den gebogenen Draht in seiner Länge auseinanderdrücken. Diese Veränderung des Drahtes sollte für eine gleichmäßige Wicklungsmatte verhindert, oder zumindest unterbunden oder verringert werden. Denn ansonsten ist es bei besonders vielen Schichten nur sehr schwierig oder eventuell sogar gar nicht automatisiert möglich, die Drähte nach dem Stapeln wieder entsprechend dem Nutbelegungsplan zu sortieren, und sie für nachfolgende Prozesse, wie z.B. einem Wickelkopf-Formen oder für ein Fügen, wie beispielsweise in [9] vorgeschlagen, zu verwenden.

Zu erwähnen ist noch, dass eine spannungsfreie Herstellung eines mäanderförmigen Einzeldrahtes zwar möglich ist, jedoch nur verbunden mit höheren Kosten und somit unwirtschaftlich, da die Rückfederungseigenschaften aufgrund von Materialschwankungen variieren, und dies prozessseitig nur durch anpassbare Biegevorgänge kompensiert werden könnte, jedoch nicht mit einer kostengünstigen Biegeanlage mit festen Endanschlägen, welche aus Kostengründen zu bevorzugen ist.

Zudem kann jede Wellenwicklungsmatte ihre eigene Stapelreihenfolge aufweisen, die wie bereits erwähnt, sowohl aus mehreren gleichen, als auch aus etlichen unterschiedlichen Einzeldrähten, oder aus einer Gruppe von Einzeldrähten aufgebaut sein kann und exakt eingehalten werden sollte. Jeder Wellenwicklungsdraht kann dabei in seinem Querschnitt, der Länge und Breite, sowie in der Biegung des Daches (Abstände, Kopfform) unterschiedlich beschaffen sein.

Bevorzugte Ausgestaltungen der Erfindung schaffen Verfahren, Einrichtungen und Vorrichtungen, die es ermöglichen, die unterschiedlichen Wellenwicklungsdrähte automatisiert und positionsgenau zu einer gestapelten Matte zusammenzusetzen.

Bei bevorzugten Ausgestaltungen der Erfindung wird, um eine gleichmäßige Wellenwicklungsmatte zu bilden, jeder einzelne mäanderförmig gebogene Draht (Wellenwicklungsdraht) - vorzugsweise während des gesamten Verfahrens - stets in einer definierten Form gehalten. Einige Ausgestaltungen der Erfindung beschreiben deshalb eine Einrichtung in Form eines Magazins, insbesondere eine Art Fallmagazin, in der der Wellenwicklungsdraht entlang seiner Kontur so abgelegt wird, dass dieser darin nicht verrutschen und seine Geometrie nicht verändern kann. Für den Mattenbildungsprozess wird bei einigen Ausführungsformen ein Werkstückaufnehmer - im Folgenden Werkstückträger genannt - unterhalb der als Magazin wirkenden Einrichtung positioniert und ausgehoben. Bei einigen Ausführungsformen ist der Werkstückträger ebenfalls so aufgebaut, dass die Einzeldrähte in ihrer Gestalt gehalten werden. Bei einigen Ausführungsformen ist eine Positioniereinrichtung zum relativen Positionieren von Magazin und Werkstückträger vorgesehen. Bei einigen Ausführungsformen wird hierzu durch ein Eintauchen des Werkstückträgers in das Magazin, insbesondere Fallmagazin, ein Ineinandergreifen der Konturen geschaffen, die es ermöglicht, den Draht definiert und ohne Zwischenhandling zu übergeben.

Bei einigen Ausführungsformen kann durch mehrfach segmentierte Magazinteile jede beliebige 2D-Form des Drahtes (Breite, Länge, Höhe, Kopfabstand, Kopfform) gestapelt werden. Natürlich können die Teile - insbesondere das gesamte Magazingehäuse - auch aus einem Stück gefertigt sein. Jeder Wellenwicklungsdraht wird durch Zusammenspiel der einzelnen Magazinteile an mehreren Stellen stets in Form gehalten.

Bei einigen Ausführungsformen hält beim bereits beschriebenen Werkstückträger der untere Teil, welcher ebenfalls mehrfach segmentiert oder aus einem Stück gefertigt sein kann, den Draht mit Hilfe von einfachen Bolzen in einer definierten Form. Dieser modulare Aufbau hat den Vorteil, dass eine Geometrieänderung des Wellenwicklungsdrahtes/-matte schnell und einfach umgerüstet werden kann.

Bei anderen bekannten Verfahren (wie z.B. dem aus [5] bekannten Verfahren), müssen die wellenförmigen Einzeldrähte einen Höhenversatz aufweisen, bevor eine Spulenmatte gestapelt werden kann. Dabei wird ein einzelner Wellenwicklungsdraht von einer Prägeeinrichtung an den Wicklungsköpfen umgeformt und anschließend mithilfe eines endlosen Transportriemens und Führungsschienen zu einer Ladestation gefördert. Erst in der Ladestation wird durch ein Anheben und Absenken der Führungsschienen der Draht an der richtigen Stelle im Werkstückträger positioniert. Bei bevorzugten Ausführungsformen der Erfindung können mehrere Einzelmatten ohne jegliches Zwischenhandling aufeinander gelegt und zu einer Matte gestapelt werden. Zwischenbiegungen der Einzeldrähte, die beispielsweise auch beim Flechten (siehe z.B. [2]) benötigt werden, können bei Ausführungsformen der Erfindung entfallen, und die Aktorik zum Ablegen der Einzeldrähte im Aufnehmer kann wesentlich einfacher gestaltet werden.

Ausführungsbeispiele der Erfindung werden im Folgenden anhand der beigefügten Zeichnungen näher erläutert. Darin zeigt:
Fig. 1 eine schematische Draufsicht auf ein Ausführungsbeispiel eines Magazins für Wellenwicklungsdrähte zur Verwendung in einem Stapelverfahren zum Stapeln der Wellenwicklungsdrähte zum Bilden einer Wellenwicklungsmatte;
Fig. 2 eine schematische Seitenansicht einer ein solches Magazin aufweisenden Stapelvorrichtung gemäß einem Ausführungsbeispiel;
Fig. 3 eine perspektivische, teils weggebrochene Ansicht der Stapelvorrichtung, wobei ein Beginn eines Stapelvorganges gezeigt ist;
Fig. 4 eine Ansicht vergleichbar von Fig. 4 in einem auf den in Fig. 3 folgenden weiteren Schritt des Stapelvorganges;
Fig. 5 eine Draufsicht auf einen bei dem Magazin verwendeten Schieber mit einem Wellenwicklungsdraht;
Fig. 6 eine erste perspektivische Ansicht des Schiebers, wobei Krafteinleitungspunkte zwischen Schieber und einem durch den Schieber zu vereinzelnden Wellenwicklungsdraht dargestellt sind;
Fig. 7 eine zweite perspektivische Ansicht des Schiebers;
Fig. 8 einen Schnitt durch einen vorderen Bereich des Schiebers;
Fig. 9a bis 9h schematische Seitenansichten der Stapelvorrichtung bei nacheinander folgenden Schritten einer bevorzugten Ausführungsform eines Stapelverfahrens;
Fig. 10a bis 10h perspektivische, teils weggebrochene Ansichten der Stapelvorrichtung bei den Schritten gemäß Fig. 9a bis 9h;
Fig. 11 eine schematische Seitenansicht einer weiteren Ausführungsform der Stapelvorrichtung;
Fig. 12 eine Vorderansicht eines Werkstückträgers der Stapelvorrichtung mit einer nach dem Stapelverfahren darauf aufgestapelten Wellenwickelmatte;
Fig. 13 eine schematische Seitenansicht einer Herstellvorrichtung für die Wellenwickelmatte, welche eine derartige Stapelvorrichtung aufweist; und
Fig. 14a bis 14c Draufsichten auf eine Ausführungsform des Werkstückträgers bei unterschiedlichen Stadien des Stapelverfahrens.

Im Folgenden werden unter Bezugnahme auf die beigefügten Zeichnungen bevorzugte Ausführungsbeispiele eines Stapelverfahrens zum Stapeln von Wellenwicklungsdrähten 10 zum Bilden einer Wicklungsmatte 12 für eine Spulenwicklung eines Stators sowie eines in einem solchen Stapelverfahren verwendbaren Magazins 14 und einer mit einem solchen Magazin 14 versehenen Stapelvorrichtung 16 näher erläutert.

Ein Ausführungsbeispiel des Magazins 14 ist in der Fig. 1 alleine und in den Fig. 2 bis 4 und 9a bis 11 als Teil der Stapelvorrichtung 16 gezeigt.

Das Stapelverfahren umfasst in einer einfachen Ausführungsform zunächst den Schritt: Bereitstellen des wenigstens eines Magazins 14, das mehrere gleichartige Wellenwicklungsdrähte 10 in einem Aufnahmeraum 18 enthält.

Das Magazin 14 ist als Fallmagazin ausgebildet, so dass sich der Aufnahmeraum 18 mit zumindest einer Richtungskomponente in vertikaler Richtung durch das Magazin 14 erstreckt. Die Kontur des Aufnahmeraums 18 ist an die aufgenommenen Wellenwicklungsdrähte 10 angepasst, so dass die Wellenwicklungsdrähte 10 an mehreren Führungen 20 an unterschiedlichen Stellen der Begrenzung des Aufnahmeraums 18 positioniert und durch den Aufnahmeraum 18 geführt werden, ohne ihre Geometrie zu verändern.

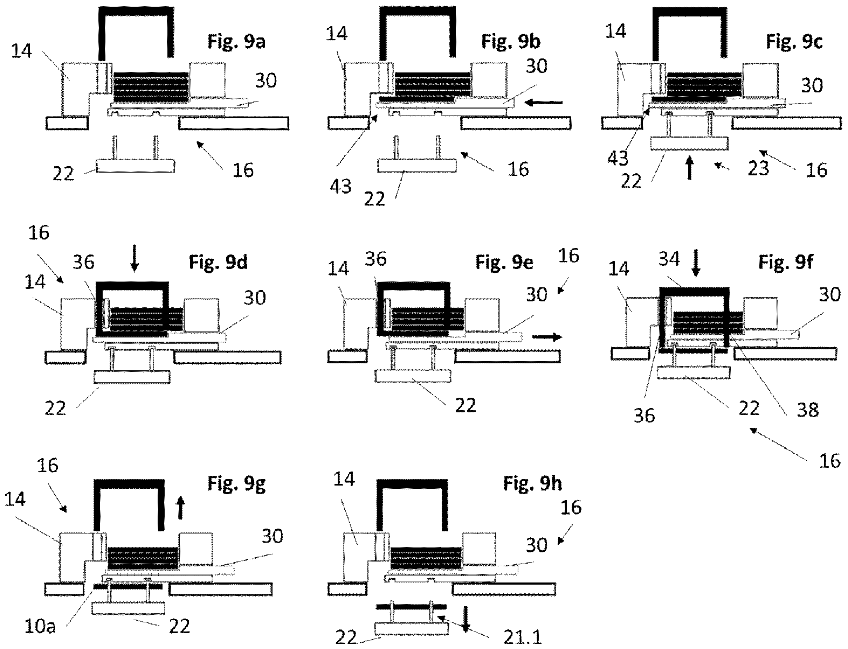

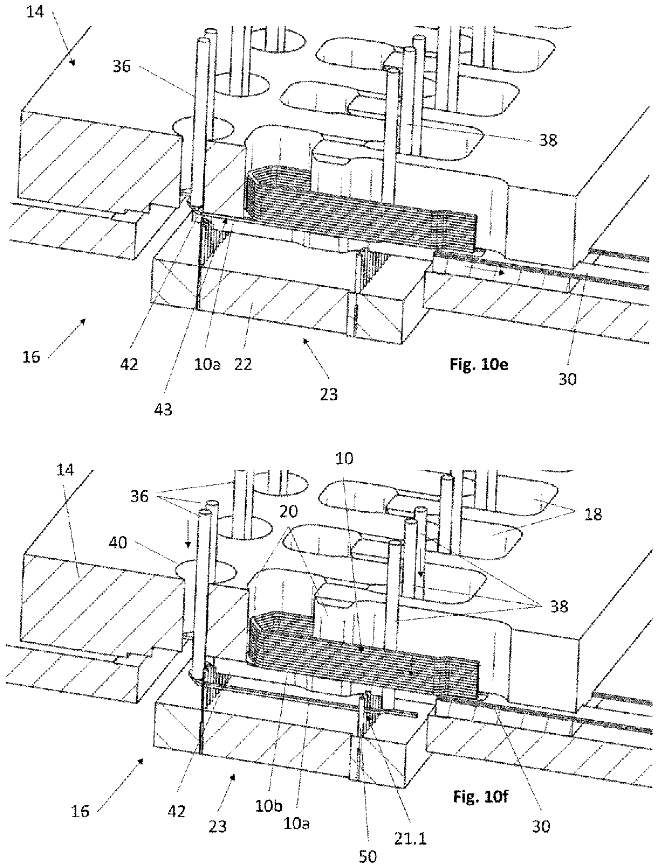

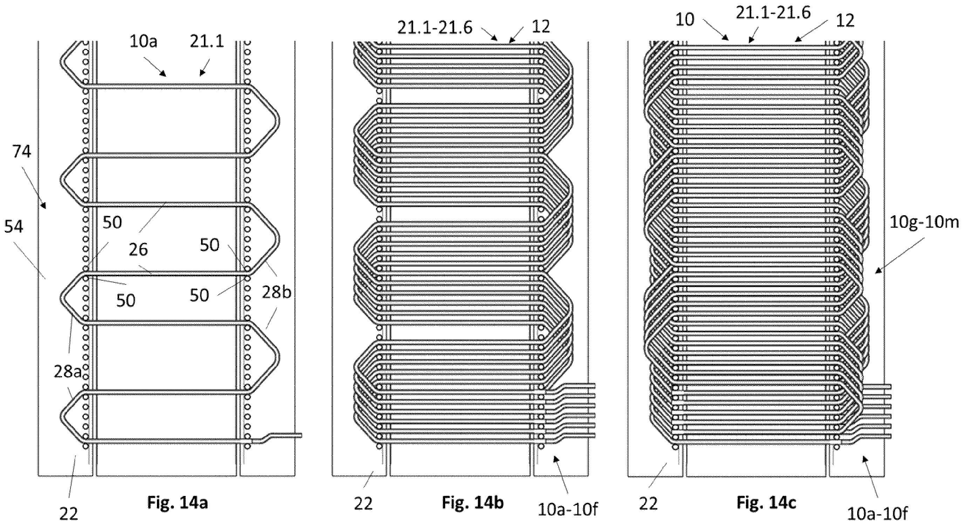

Weiter umfasst das Stapelverfahren den Schritt: Positionieren eines Werkstückträgers 22, der mit einer Haltestruktur 24 für eine aus mehreren gestapelten Wellenwicklungsdrähten 10 gebildete Wicklungsmatte 12 versehen ist, in einer ersten Übergabeposition 23 unterhalb des wenigstens einen Magazins 14 und Ablegen eines Wellenwicklungsdrahtes 10 aus dem wenigstens einen Magazin 14 auf einer ersten Position 21.1 auf dem Werkstückträger 22. Ein Ausführungsbeispiel des Werkstückträgers 22 ist als Teil der Stapelvorrichtung 16 z.B. in den Fig. 2 bis 4 sowie 9a-10h gezeigt, wobei Fig. 3 und 4 den Schritt des Positionierens an der ersten Übergabeposition 23 zeigen und beispielsweise die Fig. 9f und 10f ein Ausführungsbeispiel für den Schritt des Ablegens zeigen. Fig. 14a zeigt ein Beispiel für die erste Position 21.1, in der ein erster Wellenwicklungsdraht 10a auf dem Werkstückträger 22 abgelegt ist.

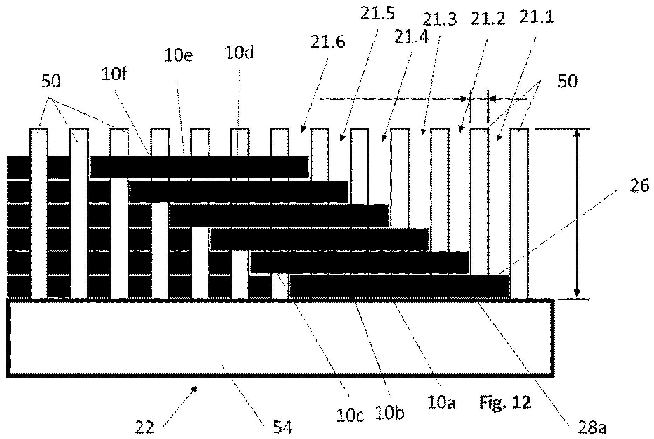

Weiter umfasst das Stapelverfahren den Schritt: Positionieren des Werkstückträgers 22 in einer zu der ersten Übergabeposition 23 versetzten zweiten Übergabeposition unterhalb des wenigstens einen Magazins 14 und Ablegen eines weiteren Wellenwicklungsdrahtes 10 aus dem wenigstens einen Magazin 14 auf einer zu der ersten Position 21.1 versetzten Position 21.2, 21.3, 21.4,... auf dem Werkstückträger 22. Beispiele für entsprechend versetzt auf dem Werkstückträger 22 abgelegte Wellenwicklungsdrähte 10a-10f und eine daraus gebildet Wicklungsmatte 12 sind in den Fig. 12 und 14b und 14c gezeigt. Aus Fig. 14b und 14c gehen insbesondere die zu der ersten Position 21.1 des ersten Wellenwicklungsdrahtes 10a versetzten weiteren Positionen 21.2, 21.2, 21.3, ... weiterer Wellenwicklungsdrähte 10b-1 0f hervor. Bei einigen Ausführungen können mehr als ein Wellenwicklungsdraht auch auf einer gemeinsamen Position auf dem Werkstückträger 22 abgelegt werden.

Das Stapelverfahren ist mit unterschiedlichen Magazinen 14 und Werkstückträgern 22 durchführbar, solange diese die oben genannten Funktionen erfüllen können.

Bevorzugte Ausführungsbeispiele für derartige Magazine 14, Werkstückträger 22, Stapelvorrichtungen 16 sowie bevorzugte Ausführungsbeispiele des Stapelverfahrens und Verwendungen derselben werden im Folgenden anhand der beigefügten Zeichnungen näher erläutert.

Fig. 1 zeigt eine Draufsicht auf eine Ausführungsform des Magazins 14. Das Magazin 14 weist ein erstes Magazinteil 14.1 und ein zweites Magazinteil 14.2 auf, die mit Vorsprüngen und Rücksprüngen versehen sind, so dass sie ineinander eingreifen und zwischen sich den mäanderförmigen Aufnahmeraum 18 bilden. Die Magazinteile 14.1, 14.2 sind bei einigen Ausführungsformen einstückig, bei anderen Ausführungsformen aus mehreren austauschbaren Segmenten gebildet. Ist ein Satz unterschiedlicher Segmente vorgesehen, so lässt sich daraus ein auf einen von mehreren unterschiedlichen Wellenwicklungsdrähten 10 angepasstes Magazin 14 bilden.

Wie in Fig. 1 sowie Fig. 2 und 3, die das Magazin14 zusammen mit anderen Einheiten oder Einrichtungen der Stapelvorrichtung 16 darstellen, zu sehen, sind in dem Aufnahmeraum 18 mehrere gleiche Wellenwicklungsdrähte 10 übereinander angeordnet.

Die Wellenwicklungsdrähte 10 sind wellenförmig oder mäanderförmig geformt und weisen mehrere mit einem bestimmten Abstand zueinander parallel angeordnete geradlinige Drahtabschnitte 26 auf, die durch dachförmige Wicklungsköpfe 28a, 28b miteinander verbunden sind.

An den vertikalen Begrenzungswänden der Magazinteile 14.1, 14.2 sind die Führungen 20 ausgebildet, die an den geradlinigen Drahtabschnitten 26 sowie an jedem Wickelkopf 28a, 28b angreifen, um die Wellenwicklungsdrähte 10 unter Beibehaltung ihrer Form und Position von oben nach unten durch den Aufnahmeraum 18 zu führen.

Bei bevorzugten Ausgestaltungen weist das Magazin 14 weiter eine Vereinzelungseinrichtung 29 zum Vereinzeln der abzulegenden Wellenwicklungsdrähte 10 auf.

Wie in den Fig. 2 und 3 dargestellt, weist das Magazin 14 z.B. als Teil der Vereinzelungseinrichtung 29 einen in Querrichtung - quer zur Längserstreckung der Wellenwicklungsdrähte 10 und in Richtung der Erstreckung der geradlinigen Drahtabschnitte - bewegbaren Schieber 30 unterhalb des Aufnahmeraums 18 auf.

Die Magazinteile 14.1, 14.2 sind auf einer Basis 32 befestigt. Das Magazin 14 weist weiter eine relativ zur Basis 32 auf und ab bewegbare Hubanordnung 34 mit vorderen und hinteren Bolzen 36, 38 auf. Zum Durchführen der vorderen Bolzen 36 sind in einem der Magazinteile 14.1 Durchgangsbohrungen 40 vorgesehen. Die hinteren Bolzen 38 können durch den Aufnahmeraum 18 geführt werden.

Unterhalb des Schiebers 30 weist das Magazin 14 weiter eine Ablageführung 42 zum Ablegen eines Wellenwicklungsdrahts 10 an einer Ablageposition 43 auf, die zu dem Aufnahmeraum 18 in der Querrichtung versetzt ist. Die Ablageführung 42 ist beispielsweise plattenartig ausgebildet und weist ebenfalls eine an die Form des Wellenwicklungsdrahtes 10 angepasste mäanderförmige Kontur auf, die zum Führen eines von dem Aufnahmeraum 18 zu der Ablageposition 43 versetzten Wellenwicklungsdrahtes 10 bei dessen Ablegen auf dem Werkstückträger 22 dient. Insbesondere bei segmentartigem Aufbau des Magazins 14 kann auch die Ablageführung 42 aus einem Sortiment unterschiedlicher Ablageführungen ausgewählt werden oder aus einem Sortiment unterschiedlicher Segmente zum Bilden der Ablageführung 42 aufgebaut werden.

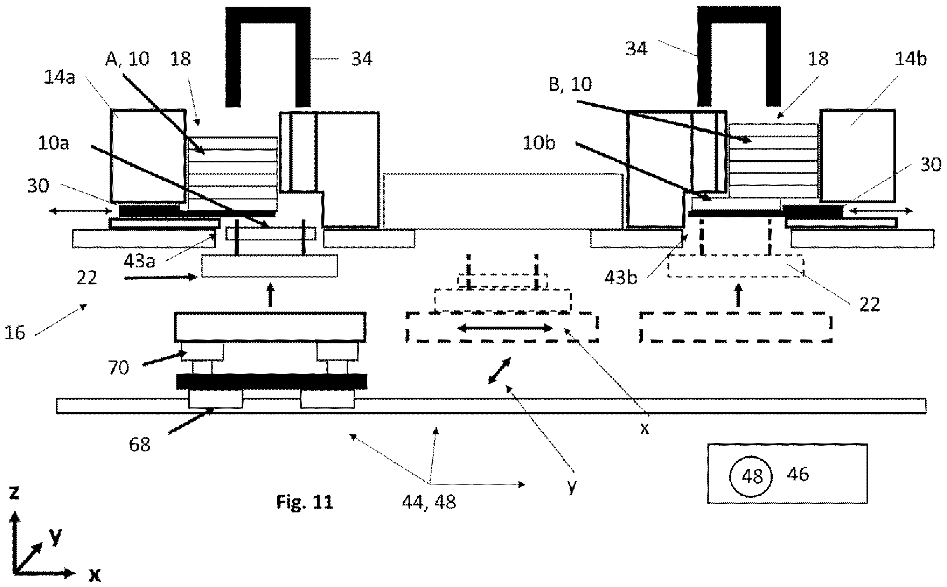

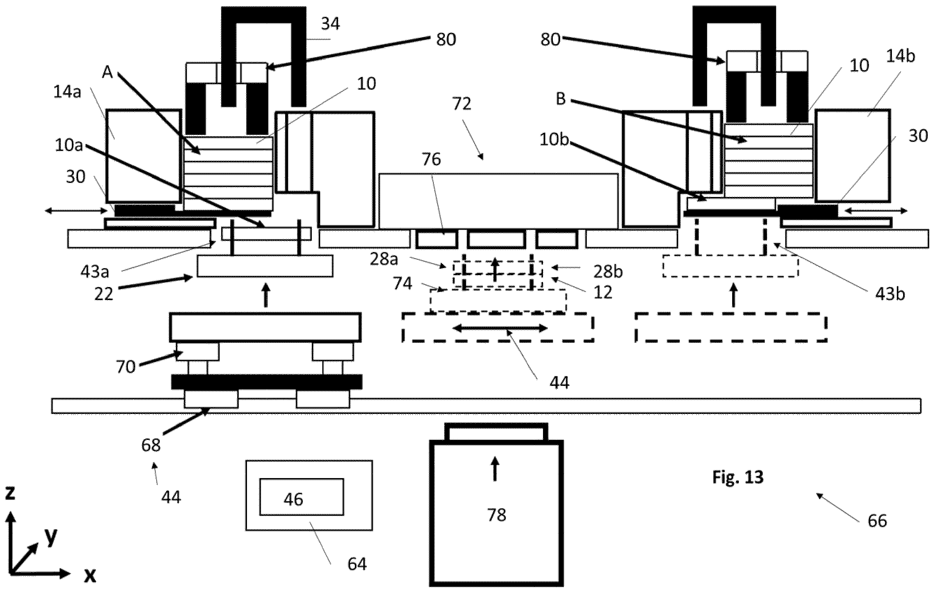

Die Stapelvorrichtung 16 weist unterhalb des Magazins 14 den als Werkstückaufnehmer dienenden Werkstückträger 22 auf, der mittels einer später noch anhand der Fig.11 und 13 näher erläuterten Bewegungseinrichtung 44 relativ zu dem Magazin 14 nach oben und unten (in z-Richtung) und in Längserstreckungsrichtung der Wellenwicklungsdrähte 10 oder des Aufnahmeraums 18 (in y-Richtung) bewegbar ist. Die Bewegungseinrichtung 44 weist eine z.B. als Teil einer Steuerung 46 ausgebildete Positioniereinrichtung 48 auf, mit der der Werkstückträger 22 in Längsrichtung (y-Richtung; entspricht der Längsrichtung des Aufnahmeraums 18 und der darin aufgenommenen Wellenwicklungsdrähte) an mehreren vordefinierten Übergabepositionen 23 relativ zu dem Magazin 14 positionierbar ist. In der Querrichtung (x-Richtung) ist der Werkstückträger 22 zum Ablegen unterhalb der Ablageposition 43 positioniert.

Um durch Stapeln eine gleichmäßige Wellenwicklungsmatte oder kurz Wicklungsmatte 12 zu bilden, wird jeder einzelne mäanderförmig gebogene Draht - Wellenwicklungsdraht 10 - während des gesamten Stapelverfahrens stets in einer definierten Form gehalten. Das Magazin 14 ist als eine Art Fallmagazin ausgebildet, in der der Wellenwicklungsdraht 10 entlang seiner Kontur so abgelegt wird, dass dieser darin (in Quer- oder Längsrichtung) nicht verrutschen und seine Geometrie nicht verändern kann. Für den Mattenbildungsprozess wird der Werkstückträger 22 mittels der Positioniereinrichtung 46 unterhalb des Magazins 14 positioniert und ausgehoben. Der Werkstückträger 22 ist ebenfalls so aufgebaut, dass die Einzeldrähte in ihrer Gestalt gehalten werden. Durch ein Eintauchen des Werkstückträgers 22 in das Magazin 14 wird ein Ineinandergreifen der Konturen geschaffen, das es ermöglicht, den Wellenwicklungsdraht 10 definiert und ohne Zwischenhandling zu übergeben.

Wie in Fig. 2 und 3 gezeigt, weist die Haltestruktur 24 des Werkstückträgers 22 mehrere (hier zwei) Reihen kammartig angeordneter Führungsbolzen oder Aufnahmestifte 50 auf.

Das Magazin weist an seiner Unterseite, insbesondere an der Unterseite der Ablageführung 42, Aufnahmeausnehmungen 52.1, 52.2 auf, in die die Aufnahmestifte 50 der Haltestruktur 24 des eintauchenden Werkstückträgers 22 aufgenommen werden können, um einen Wellenwicklungsdraht 10 zu übergeben. Im eingetauchten Zustand, wie er in Fig. 4 dargestellt ist, überschneiden sich in z-Richtung gesehen die Aufnahmestifte 50 mit den Führungen 20, 42 des Magazins 14. Es erfolgt eine nahtlose Führung des Wellenwicklungsdrahtes 10 bei der Übergabe ohne Zwischenhandling, wobei der Wellenwicklungsdraht 10 seine Form und Position beibehält.

Bei einigen Ausführungsformen kann durch mehrfach segmentierte Magazinteile 14.1, 14.2, 30, 42 jede beliebige 2D-Form des Drahtes (Breite, Länge, Höhe, Kopfabstand, Kopfform) gestapelt werden. Natürlich können die Teile 14.1, 14.2, 30, 42 auch aus einem Stück gefertigt sein. Jeder Wellenwicklungsdraht 10 wird durch Zusammenspiel der einzelnen Magazinteile 14.1, 14.2, 30, 42 an mehreren Stellen stets in Form gehalten. Beim bereits beschriebenen Werkstückträger 22 hält ein unterer Teil 54, welcher ebenfalls mehrfach segmentiert oder aus einem Stück gefertigt sein kann, den übergebenen Wellenwicklungsdraht 10 mit Hilfe von einfachen Bolzen - hier die Aufnahmestifte 50 - in einer definierten Form. Der optionale modulare Aufbau hat den Vorteil, dass eine Geometrieänderung des Wellenwicklungsdrahtes 10 und/oder der damit gebildeten Wicklungsmatte 12 schnell und einfach umgerüstet werden kann.

Bei dem Stapelverfahren sowie der Stapelvorrichtung 16 gemäß bevorzugten Ausführungsformen der Erfindung können Einzeldrähte oder auch mehrere Einzelmatten (Gruppen von mehreren Wellenwicklungsdrähten 10) ohne jegliches Zwischenhandling aufeinander gelegt und zu einer Wicklungsmatte 12 gestapelt werden. Zwischenbiegungen der Einzeldrähte können entfallen und die Aktorik zum Ablegen der Einzeldrähte im Werkstückträger 22 kann wesentlich einfacher als bisher gestaltet werden.

Mehrere 2D-gebogene (zweidimensional in einer Ebene gebogene) Wellenwicklungsdrähte 10 werden übereinander in das speziell für deren Drahtgeometrie angepasste Magazin 14 eingelegt. Durch Anpassung des Magazins 14 kann die Stapelvorrichtung 16 nahezu alle Breiten, Längen und Höhen des Einzeldrahtes aufnehmen. Auch unterschiedlich lange, gerade Anteile, sowie unterschiedlich große Dachgeometrien (Größe, insbesondere Länge in Längsrichtung oder sonstige Geometrie der Wickelköpfe) innerhalb eines Wellenwicklungsdrahtes 10 spielen keine Rolle.

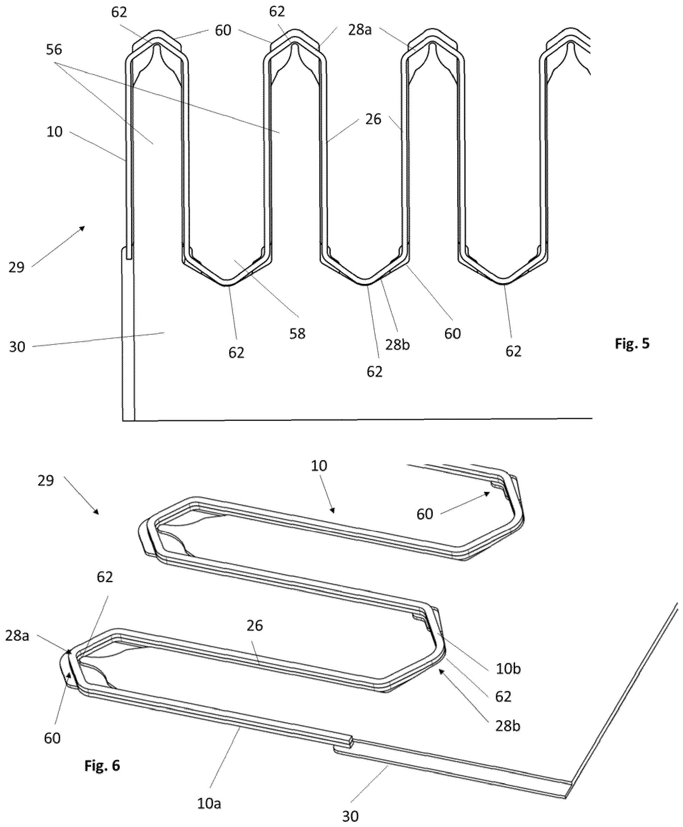

Am Grund des Magazins 14 befindet sich der Schieber 30, von dem ein Ausführungsbeispiel in den Fig. 5 bis 8 dargestellt ist und der vorzugsweise ebenfalls eine speziell an den Wellenwicklungsdraht 10 angepasste Form besitzt.

Bei einigen Ausführungsformen übernimmt der Schieber 30 wenigstens zwei Aufgaben. Erstens dient er als Ablage, wodurch ein ungewolltes Herunterfallen des Wellenwicklungsdrahtes 10 verhindert wird. Zweitens werden die Wellenwicklungsdrähte 10 damit vereinzelt. Bei anderen Ausführungsformen kann der Schieber 30 auch so gestaltet sein, dass der Wellenwicklungsdraht 10 nicht darauf abgelegt wird, wobei der Schieber 30 nur zum Vereinzeln dient. Dies ist z.B. möglich, indem der Wellenwicklungsdraht 10 durch die Eigenspannung der mäanderförmigen Biegung sich nach außen an die Führungen 20 des Magazins 14 andrückt. Für einen hinsichtlich der Prozesssicherheit verbesserten Ablauf wird wie in den gezeigten Ausführungsformen der Schieber 30 aber bevorzugt wie beschrieben auch als Ablage für den Wellenwicklungsdraht 10 ausgebildet.

Gemäß den Fig. 5 bis 8 weist der Schieber 30 an die Mäanderform angepasste zahnartige Vorsprünge 56 mit Rücksprüngen 58 dazwischen und daran ausgebildete stufenartige Drahtauflagen 60 zum Bilden von Krafteinleitungspunkten 62 auf. Um den Wellenwicklungsdraht 10 gleichmäßig zu vereinzeln, wird an jeder Biegung des Daches, vorne (am jeweiligen vorderen Wicklungskopf 28a) wie hinten (am jeweiligen hinteren Wicklungskopf 28b), die Kraft zum Verschieben eingeleitet. Das kann wie in Fig. 5 und 6 angedeutet nur an einer Stelle pro Dach (Wicklungskopf 28a, 28b), aber auch an mehreren Stellen des Wellenwicklungsdrahtes 10 geschehen.

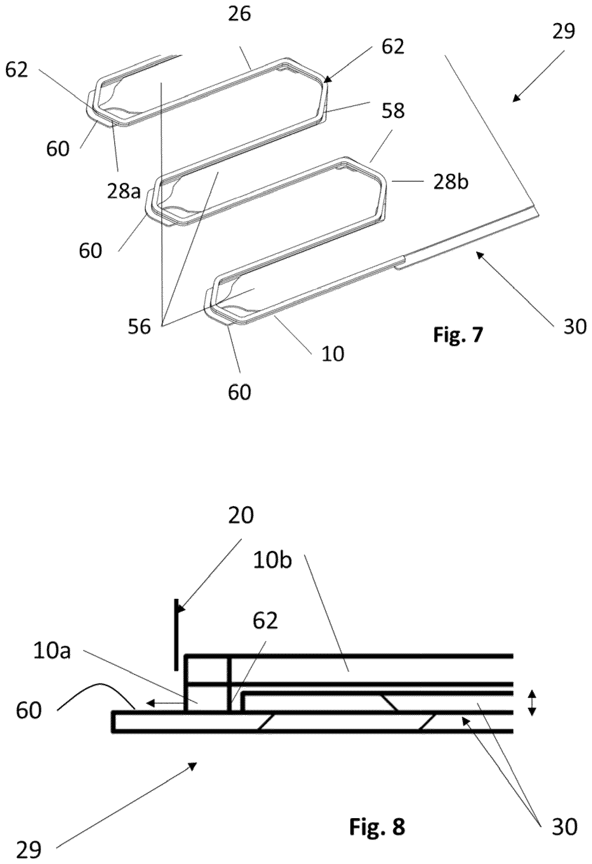

Je nach Drahthöhe können im Herstellverfahren für die Wickelmatte 12 unterschiedliche Schieber 30 eingesetzt werden. Bei höheren Wellenwicklungsdrähten 10 kann der Schieber 30 z.B. aus einem Teil gefertigt sein, z.B. aus einer massiven Platte durch spanabhebende Bearbeitung oder sonstige geeignete Verfahren. Bei niedrigeren Wellenwicklungsdrähten 10 können aber auch beispielsweise zwei Bleche dünner Materialstärke miteinander verbunden, bevorzugt verschweißt, werden, damit sie zusammen in der Höhe kleiner sind als ein Wellenwicklungsdraht. Ein Beispiel eines aus zwei miteinander verbundenen Einzelteilen, wie z.B. gelaserten Bleichen, gebildeten Schiebers 30 ist in Fig. 8 im Vertikalschnitt gezeigt.

Der Schieber 30 ist bei den dargestellten Ausführungsformen in der Höhe (z-Richtung) so gestaltet, dass nur der unterste Wellenwicklungsdraht 10 im Magazin verschoben wird. Die weiteren aufeinanderliegenden Wellenwicklungsdrähte 10 werden dann vom Magazin beim Vereinzeln zurückgehalten.

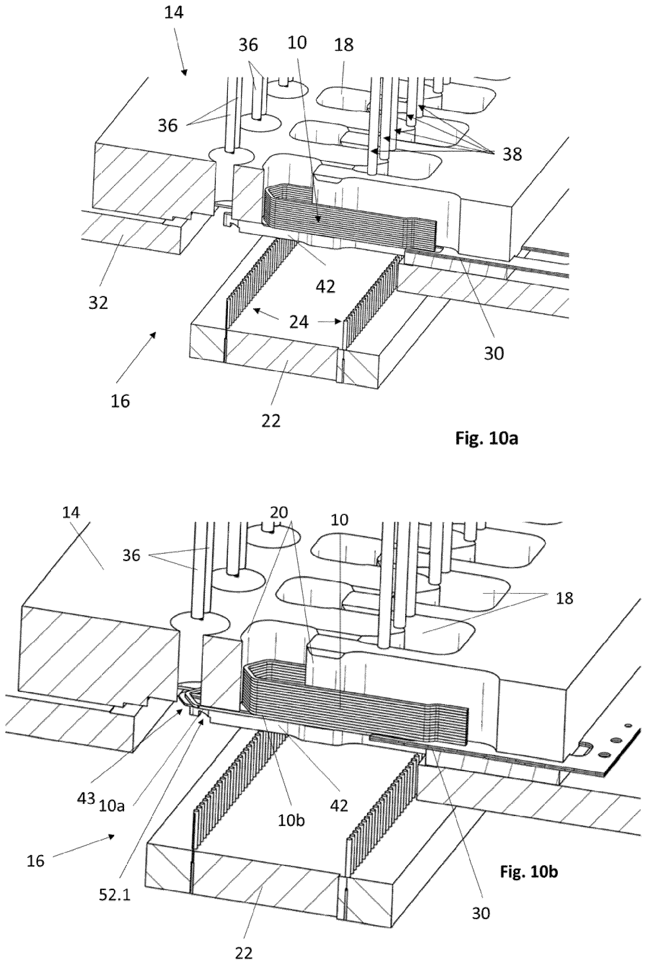

Im Folgenden wird anhand der Darstellungen der Fig. 9a bis 9h, die jeweils schematische Seitenansichten der Stapelvorrichtung 16 bei unterschiedlichen Schritten zeigen, und der Fig. 10a bis 10h, die perspektivische, teils weggebrochene Ansichten der Stapelvorrichtung 16 bei den entsprechenden Schritten zeigen, eine besonders bevorzugte Ausgestaltung des Stapelverfahrens (mit einigen vorteilhaften optional vorgesehen Schritten) näher erläutert.

Der Ablauf des Stapelverfahrens wird über die (in Fig. 11 und 13 angedeutete) Steuerung 46 der Stapelvorrichtung 16, die Teil einer Gesamtsteuerung 64 einer Herstellvorrichtung 66 für die Wicklungsmatte 12 sein kann, gesteuert. Die Steuerungen 46, 64 sind insbesondere als elektronische Steuerung mit darin geladenen Computerprogrammen ausgeführt und enthalten entsprechende Anweisungen für die Ansteuerung der Bewegungsabläufe der Vorrichtungen 16, 66.

Bei vorteilhaften Ausgestaltungen des Stapelverfahrens wird ein Werkstückträger 22 unterhalb des Magazins 14 positioniert und anschließend ausgehoben. Der Werkstückträger 22 selbst hat je nach Draht- und Mattengeometrie entsprechend angeordnete und ausgebildete Aufnahmestifte 50. Zwischen zwei benachbarten Aufnahmestifte 50 befindet sich immer ein Drahtanteil - insbesondere werden die geradlinigen Drahtabschnitte 26 jeweils zwischen zwei benachbarten Aufnahmestiften 50 abgelegt.

Der Abstand zwischen den Aufnahmestiften 50 ist entsprechend dem Abstand der Nuten in dem die Spulenwicklung aufnehmenden Bauteil der elektrischen Maschine - insbesondere dem Blechpaket eines Stators - gewählt. Bei Verwendung der Wicklungsmatte 12 im Stator entspricht deren Längsrichtung (y-Richtung der hier beigefügten Figuren) der Umfangsrichtung im Stator, die Höhenrichtung (z-Richtung) der Wicklungsmatte 12 entspricht bei Verwendung im Stator der radialen Richtung, und die Querrichtung (x-Richtung) entspricht bei Verwendung der Wicklungsmatte 12 im Stator der Axialrichtung.

Gemäß Fig. 4, auf die nun wiederum Bezug genommen wird, entsteht durch das Eintauchen der Aufnahmestifte 50 des in Übergabeposition 23 positionierten Werkstückträgers 22 in das Magazin 14 ein Übergabebereich, der es ermöglicht, den einzelnen Wellenwicklungsdraht 10 über die gesamte Zeit weiterhin stabil in seiner Form zu halten. Damit jeder Wellenwicklungsdraht besser kontrolliert in die den Werkstückträger 22 gelangt, wird er bei der dargestellten Ausführungsform bei der Übergabe aktiv, bevorzugt mit einfachen Bolzen - hier den vorderen und hinteren Bolzen 36, 38 -, in den Werkstückträger 22 geschoben. Dadurch wird der prozesssichere Ablauf verbessert, und es gelangt jeder Wellenwicklungsdraht 10 in den Werkstückträger 22. Das aktive Schieben kann z.B. an zwei oder mehr Stellen pro Wicklungskopf 28a, 28b, aber auch an nur einer Stelle pro Wicklungskopf 28a, 28b geschehen. Die vorderen Bolzen 36 haben dabei gemäß bevorzugten Ausgestaltungen zusätzlich die Aufgabe, den Wellenwicklungsdraht 10 auf der separierten, vorderen Position - d.h. der Ablageposition - zu halten. Beispielsweise können die vorderen Bolzen als Vereinzelungsbolzen mit einer einfachen Stufe versehen werden, damit der Wellenwicklungsdraht 10 beim Zurückziehen des Schiebers 30 nicht mit nach hinten gezogen wird.

Die Fig. 9a und 10a zeigen die Ausgangsposition bei dem bevorzugten Ausführungsbeispiel des Stapelverfahrens. Mehrere Wellenwicklungsdrähte 10 werden in dem Magazin 14 in dem Aufnahmeraum 18 bereitgestellt. Der unterste Wellenwicklungsdraht 10a liegt auf der dem zurückgezogenen Schieber 30 (oder bei anderen Ausführungen auf der Ablageführung 42) auf.

Gemäß den Fig. 9b und 10b vereinzelt dann der Schieber 30 den untersten Wellenwicklungsdraht 10a. Hierzu wird der Schieber 30 von einer Ausgangsposition unterhalb des Aufnahmeraums 18 in Querrichtung zu der Ablageposition 43 verschoben und dabei der unterste Wellenwicklungsdraht 10a mitgenommen.

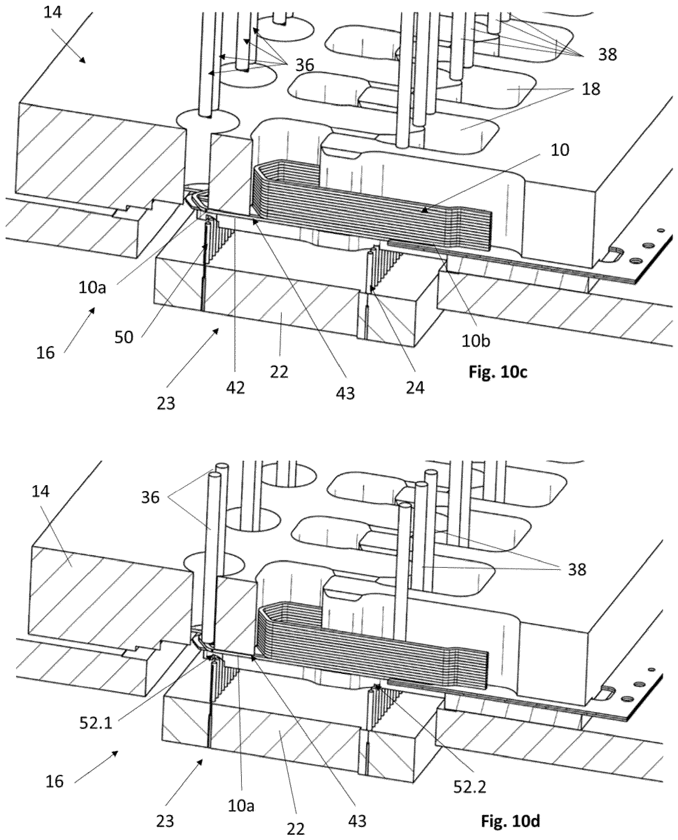

Gemäß den Fig. 9c und 10c wird der Werkstückträger 22 entsprechend einer ersten Position 21.1, die der gerade abzulegende Wellenwicklungsdraht - hier zunächst der unterste Wellenwicklungsdraht 10a - in Längsrichtung auf dem Werkstückträger 22 und letztendlich innerhalb der Wicklungsmatte 12 einzunehmen (siehe hierzu die Fig. 14a-14c) hat, auf einer ersten Übergabeposition 23 positioniert. Hierzu nimmt der Wicklungsträger 22 zunächst die in Fig. 10b bis 10g gezeigte Längsposition für den ersten Wellenwicklungsdraht 10a ein. Der Werkstückträger 22 wird - wie in Fig. 9c und 10c gezeigt - insbesondere nach der Positionierung in Längsrichtung, ausgehoben. Der Werkstückträger 22 und das Magazin 14 werden hierzu relativ zueinander in vertikaler Richtung (z-Richtung) aufeinander zu bewegt, bis der Werkstückträger 22 in das Magazin 14 eintaucht und die Aufnahmestifte 50 und die Führungen 20 einander in der vertikalen Richtung überlappen.

Gemäß Fig. 9d und 10d fahren anschließend die Bolzen 36, 38 in eine Rückhalteposition, in der sie den auf die Ablageposition verschobenen und somit vereinzelten abzulegenden Wellenwicklungsdraht - hier z.B. der erste Wellenwicklungsdraht 10a - gegen eine Rückverschiebung in Querrichtung sichern. Hierzu fährt die Hubanordnung 34 mit den vorderen und hinteren Bolzen 36, 38 nach unten, bis die stufenartigen Enden an den vorderen Wicklungsköpfen 28a des abzulegenden Wellenwicklungsdrahtes 10a angreifen.

Gemäß Fig. 9e und 10e fährt dann der Schieber 30 zurück in Ausgangsposition und gibt somit den Weg für den abzulegenden Wellenwicklungsdraht 10a frei.

Gemäß Fig. 9f und 10f schieben dann die vorderen und hinteren Bolzen 36, 38 den abzulegenden Wellenwicklungsdraht 10a - insbesondere unter Führung an der Ablageführung 42 - in den Werkstückträger 22. Hierbei werden die geradlinigen Drahtabschnitte 26 des abzulegenden Wellenwicklungsdrahtes 10a jeweils zwischen mehreren Paaren benachbarter Aufnahmestifte 50 aufgenommen.

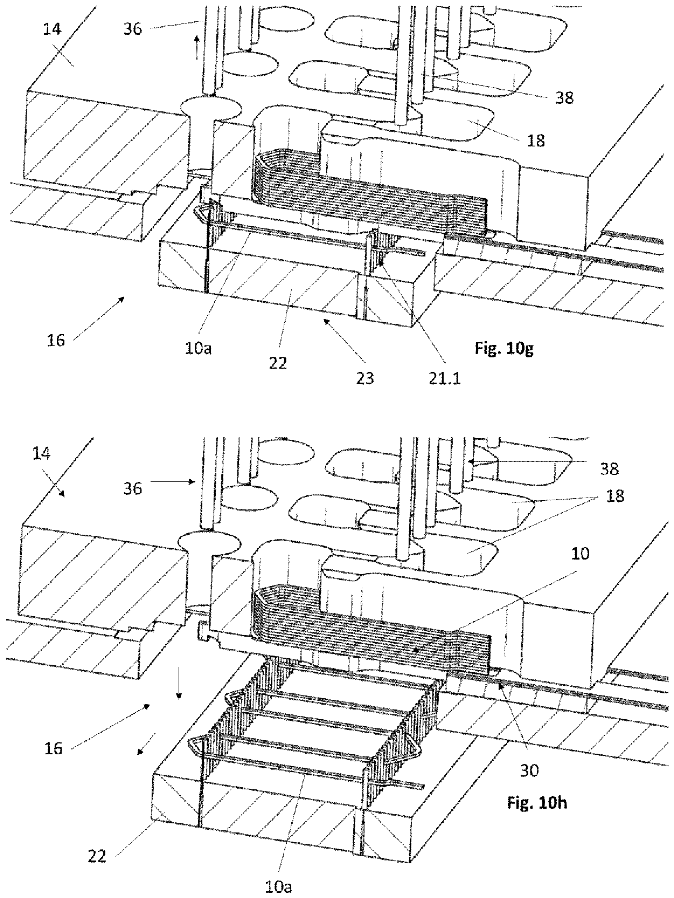

Gemäß Fig. 9g und 10g fahren dann die Bolzen 36, 38 zurück in ihre Ausgangsposition. Hierzu fährt die Hubanordnung 34 mit den vorderen und hinteren Bolzen 36, 38 nach oben.

Gemäß Fig. 9h und 10h fährt dann der Werkstückträger 22 mit dem auf ihm abgelegten Wellenwicklungsdraht 10a zurück in seine Ausgangslage.

Anschließend wird der Werkstückträger 22 in seiner Längsrichtung entsprechend der gewünschten zweiten Position 21.2 des nächsten abzulegenden Wellenwicklungsdrahtes 10b neu positioniert. Hierzu wird in der Regel der Werkstückträger 22 relativ zu dem Magazin 14 an einer zu der ersten Übergabeposition 23 in Längsrichtung versetzten zweiten Übergabeposition positioniert, um einen weiteren Wellenwicklungsdraht 10b versetzt zu dem zuvor abgelegten Wellenwicklungsdraht 10a mit den ansonsten gleichen Schritten wie für den ersten Wellenwicklungsdraht 10a beschrieben auf dem Werkstückträger 22 abzulegen. Je nach Ausbildung der Wicklungsmatte 12 kann es aber auch vorkommen, dass ein weiterer Wellenwicklungsdraht 10b auf der gleichen Längsposition wie ein unmittelbar oder mittelbar zuvor abgelegter Wellenwicklungsdraht 10a abgelegt wird.

Die Fig. 12 und 14a-14c zeigen unterschiedliche Ansichten des Werkstückträgers 22 mit beispielhaften Drahtstapelungen.

Gemäß einigen Ausführungsformen kann die Stapelvorrichtung 16, wie dies anhand der Fig. 1 bis 10 dargestellt worden ist, ein einzelnes Magazin 14 aufweisen, um eine Wicklungsmatte 12 aus gleichartigen Wellenwicklungsdrähten 10 aufzustapeln.

In Fig. 11 ist eine weitere Ausführung der Stapelvorrichtung 16 gezeigt, die mehrere solcher Magazine 14, beispielsweise zumindest ein erstes Magazin 14a und ein zweites Magazin 14b, aufweist. Die Bewegungseinrichtung 44 ist dazu ausgebildet, den Werkstückträger 22, z.B. durch Bewegung in Querrichtung (x-Richtung), wahlweise an der Ablageposition 43a des ersten Magazins 14a oder an der Ablageposition 43b des zweiten Magazins 14b zu positionieren.

Da wie bereits beschrieben, eine Wicklungsmatte 12 auch aus unterschiedlich gebogenen Einzeldrähten - Wellenwicklungsdrähten 10 - zusammengesetzt sein kann, wird je nach Mattengeometrie - insbesondere Anzahl unterschiedlicher Einzeldrähte, Menge an jeweils verwendeter Einzeldrähte und/oder Stapelreihenfolge der Einzeldrähte - bevorzugt je wenigstens ein Magazin 14a, 14b pro zu verwendender unterschiedlicher Einzeldrahtgeometrie vorgesehen. In dem ersten Magazin 14a ist ein erster Stapel A von Wellenwicklungsdrähten 10 mit einer ersten Geometrie und in dem zweiten Magazin 14b ist ein zweiter Stapel B mit Wellenwicklungsdrähten 10 mit einer unterschiedlichen zweiten Geometrie angeordnet.

Um die Stapelreihenfolge im Werkstückträger 22 abzubilden, wird dieser bevorzugt über erste Linearachsen 68 - Beispiel für Aktoren der Bewegungseinrichtung 44 - zwischen den Magazinen 14a, 14b hin und her bewegt (Bewegung in Querrichtung oder x-Richtung). Während der Fahrt kann der Werkstückträger 22 senkrecht zur Fahrtrichtung, d.h. hier in Längsrichtung oder y-Richtung, ebenfalls bevorzugt mit Linearachsen, hier den zweiten Linearachsen 70, bewegt werden, um den benötigten Abstand zwischen jedem Einzeldraht wiederholgenau und gleichmäßig herzustellen. Hierdurch kann die Längsrichtungs-Positionierung von der ersten Übergabeposition 23 zu der zweiten Übergabeposition bereits während der Fahrt zwischen den Magazinen 14a, 14b erfolgen.

In Fig. 11 ist außerdem die oben bereits erwähnte Steuerung 46 angedeutet, die mit den Aktoren der Stapelvorrichtung 16, wie insbesondere den Aktoren für den Hub der Hubanordnung 34, den Aktoren des Schiebers 30 und den Aktoren der Bewegungseinrichtung 44 (für Bewegung des Werkstückträgers 22 in x-, y- und/oder z-Richtung) in Verbindung steht und dazu ausgebildet ist, die Stapelvorrichtung 16 zum automatischen Durchführen des Stapelverfahrens anzusteuern.

Fig. 13 zeigt eine Herstellvorrichtung 66 zum Herstellen der Wicklungsmatte 12 zum Bilden einer Spulenwicklung für einen Stator (oder für einen Rotor). Die Herstellvorrichtung 66 weist die Stapelvorrichtung 16 gemäß einer der zuvor erläuterten Ausführungsformen (hier beispielsweise mit erstem und zweiten Magazin 14a, 14b) und eine Presse 72 auf, die dazu ausgebildet ist, Wicklungsköpfe 28a, 28b eines auf dem Werkstückträger 22 gebildeten Stapels von Wellenwicklungsdrähten 10 zu prägen.

Die Presse 72 weist zum Beispiel ein unteres Prägegesenk 74, ein oberes Prägegesenk 76 und ein Fügemodul 78 auf. Vorzugsweise ist das untere Teil 54 des Werkstückträgers 22 als unteres Teil des Prägegesenks 74 ausgebildet oder auf dem unteren Prägegesenk 74 angeordnet.

Weiter weist die Herstellvorrichtung 66 die Gesamtsteuerung 64 auf, die dazu ausgebildet ist, die Herstellvorrichtung 66 automatisch zum Durchführen des Herstellverfahrens zum Herstellen der Wicklungsmatte 12 anzusteuern. Neben Durchführen des Stapelverfahrens beinhaltet dieses auch ein Prägen von Wicklungsköpfen 28a, 28b der bereits auf dem Werkstückträger 22 gestapelten Wellenwicklungsdrähte 10a-10f.

Eine fertige Wicklungsmatte 12 besteht somit nicht nur aus aufeinander gelegten Einzeldrähten. Um die Wicklungsmatte 12 optimal in ein Rotor- oder Statorblechpaket zu fügen, weisen die Wellenwicklungsdrähte 10, 10a-10f vielmehr noch eine Prägung im Kopfbereich auf. Um dies zu erhalten, wird bei bevorzugten Ausgestaltungen der Werkstückträger 22 so ausgeführt, dass die Einzeldrähte gleich auf dem unteren Teil 54 eines Prägegesenks 74 gestapelt werden. Durch die bevorzugt eingesetzten Lineareinheiten 68, 70 kann der Werkstückträger 22 exakt zum passenden oberen Prägegesenk 76 bewegt werden. Dadurch ist es möglich, unabhängig davon wie viele Wellenwicklungsdrähte 10 sich im Werkstückträger 22 befinden, die Wicklungsmatte 12 dann - in mehreren Teilschritten oder als Ganzes - zu pressen. Ein hierzu eingesetztes Fügemodul 78 kann dabei die Pressung von unten aber auch von oben ausführen. Zusätzlicher Vorteil ist, dass selbst nach dem Pressvorgang die Wicklungsmatte 12 noch immer durch die Aufnahmestifte 50 in Form gehalten wird. Eine weitere Werkstückübergabe kann dadurch wesentlich einfacher gestaltet werden.

Wie am Beispiel der Fig. 13 gezeigt, kann das Magazin 14 bei einigen Ausführungsformen zusätzlich noch mit einem Niederhalter 80 ausgestattet werden, der für eine zusätzliche Sicherheit dafür sorgt, auch nur den untersten Wellenwicklungsdraht 10 im Magazin zu vereinzeln. Durch den Niederhalter 80 lassen sich eventuelle Unebenheiten herausdrücken, und die Wellenwicklungsdrähte 10, 10a-10g liegen flach auf dem Schieber 30 (oder der Ablageführung 32) auf. Der Niederhalter 80 kann z.B. mittels eines Aktors gesteuert über die Steuerung 46 bewegt werden, um die in dem Aufnahmeraum 18 des Magazins 14 angeordneten Wellenwicklungsdrähte mit einer vertikalen Niederhaltekraft von oben zu beaufschlagen.

Fig. 14a zeigt den Werkstückträger 22 mit dem ersten darauf auf der ersten Position 21.1 abgelegten Wellenwicklungsdraht 10a. Fig. 14b zeigt den Werkstückträger 22 mit einer Wicklungsmatte 12, die einen ersten bis sechsten aufeinander an unterschiedlichen Positionen 21.1-21.6 aufeinandergestapelten Wellenwicklungsdraht 10a-10f umfasst. Fig. 14c zeigt eine Wicklungsmatte 12, bei der auf dem ersten bis sechsten Wellenwicklungsdraht 10a-10f noch ein siebter bis zwölfter Wellenwicklungsdraht 10g-10m gestapelt sind. Wie aus der Fig, 14c hervorgeht, können auch mehrere Wellenwicklungsdrähte 10a, 10g auf der gleichen Position 21.1 in Längsrichtung übereinandergestapelt sein. Der zweite und achte Wellenwicklungsdraht 10b, 10h liegen auf der zweiten Position 21.2 übereinander usw.

### Bezugszeichenliste:

- 10: Wellenwicklungsdraht
- 10a: erster Wellenwicklungsdraht
- 10b: zweiter Wellenwicklungsdraht
- 10c: dritter Wellenwicklungsdraht
- 10d: vierter Wellenwicklungsdraht
- 10e: fünfter Wellenwicklungsdraht
- 10f: sechster Wellenwicklungsdraht
- 10g-10m: siebter bis zwölfter Wellenwicklungsdraht
- 12: Wicklungsmatte
- 14: Magazin
- 14a: erste Magazin
- 14b: zweites Magazin
- 14.1: erstes Magazinteil
- 14.2: zweites Magazinteil
- 16: Stapelvorrichtung
- 18: Aufnahmeraum
- 20: Führung
- 21.1: erste Position
- 21.2, 21.2, 21.3,: weitere Position
- 22: Werkstückträger
- 23: Übergabeposition
- 24: Haltestruktur
- 26: geradliniger Drahtabschnitt
- 28a: erster Wicklungskopf
- 28b: zweiter Wicklungskopf
- 29: Vereinzelungseinrichtung
- 30: Schieber
- 32: Basis
- 34: Huabanordnung
- 36: vordere Bolzen
- 38: hintere Bolzen
- 40: Durchgangsbohrung
- 42: Ablageführung
- 43: Ablageposition
- 43a: Ablageposition (erstes Magazin)
- 43b: Ablageposition (zweites Magazin)
- 44: Bewegungseinrichtung
- 46: Steuerung
- 48: Positioniereinrichtung
- 50: Aufnahmestift
- 52.1: vordere Aufnahmeausnehmung
- 52.2: hintere Aufnahmeausnehmung
- 54: unterer Teil
- 56: zahnartiger Vorsprung (des Schiebers)
- 58: Rücksprung (des Schiebers)
- 60: Drahtauflage
- 62: Krafteinleitungspunkt
- 64: Gesamtsteuerung
- 66: Herstellvorrichtung
- 68: erste Linearachse
- 70: zweite Linearachse
- 72: Presse
- 74: Prägegesenk (unterer Teil)
- 76: oberes Prägegesenk
- 78: Fügemodul
- 80: Niederhalter
- A: erster Stapel
- B: zweiter Stapel

## Patentansprüche

1. Stapelverfahren zum Stapeln von Wellenwicklungsdrähten (10, 10a-10f) zum Bilden einer Wicklungsmatte (12) für eine Spulenwicklung eines Stators, wobei das Stapelverfahren die Schritte umfasst: Bereitstellen wenigstens eines Magazins (14, 14a, 14b), das mehrere gleichartige Wellenwicklungsdrähte (10) in einem Aufnahmeraum (18) enthält, wobei das Magazin (14, 14a, 14b) als Fallmagazin ausgebildet ist, so dass sich der Aufnahmeraum (18) mit zumindest einer Richtungskomponente in vertikaler Richtung durch das Magazin (14, 14a, 14b) erstreckt, wobei die Kontur des Aufnahmeraums (18) an die aufgenommenen Wellenwicklungsdrähte (10) angepasst ist, so dass die Wellenwicklungsdrähte (10) an mehreren Führungen (20) an unterschiedlichen Stellen der Begrenzung des Aufnahmeraums (18) positioniert und durch den Aufnahmeraum (18) geführt werden, ohne ihre Geometrie zu verändern, Positionieren eines Werkstückträgers (22), der mit einer Haltestruktur (24) für eine aus mehreren gestapelten Wellenwicklungsdrähten (10, 10a-10f) gebildete Wicklungsmatte (12) versehen ist, in einer ersten Übergabeposition (23) unterhalb des wenigstens einen Magazins (14, 14a, 14b) und Ablegen eines Wellenwicklungsdrahtes (10) aus dem wenigstens einen Magazin (14, 14a, 14b) auf einer ersten Position (21.1) auf dem Werkstückträger,
Positionieren des Werkstückträgers (22) in einer zu der ersten Übergabeposition (23) versetzten zweiten Übergabeposition unterhalb des wenigstens einen Magazins (14, 14a, 14b) und Ablegen eines weiteren Wellenwicklungsdrahtes (10) aus dem wenigstens einen Magazin (14, 14a, 14b) auf einer zu der ersten Position (21.1) versetzten Position (21.2, 21.2, 21.3) auf dem Werkstückträger (22).

2. Stapelverfahren nach Anspruch 1, **gekennzeichnet durch**
Bereitstellen mehrerer Magazine (14a, 14b), die jeweils unterschiedliche geformte Wellenwicklungsdrähte (10) mit jeweils daran angepassten Aufnahmeräumen (18) enthalten,
Positionieren des Werkstückträgers (22) an einem ersten (14a) der Magazine und Ablegen eines ersten Wellenwicklungsdrahtes (10a) aus dem ersten Magazin (14a) auf der ersten Position auf dem Werkstückträger (22) und
Positionieren des Werkstückträgers (22) an einem zweiten (14b) der Magazine und Ablegen eines zweiten Wellenwicklungsdrahtes (10b) aus dem zweiten Magazin (14b) auf der zweiten Position auf dem Werkstückträger (22).

3. Stapelverfahren nach einem der voranstehenden Ansprüche, **dadurch gekennzeichnet, dass** das Ablegen wenigstens einen oder mehrere der Schritte umfasst:
3.1 Vereinzeln des abzulegenden untersten Wellenwicklungsdrahtes (10a) des Magazins (14, 14a, 14b) mittels einer Vereinzelungseinrichtung (29), die den abzulegenden Wellenwicklungsdraht (10) von dem Aufnahmeraum (18) zu einer Ablageposition (43) versetzt, wobei der Wellenwicklungsdraht (10) beim Versetzen derart gehalten und/oder geführt wird, dass dessen Geometrie beibehalten wird;
3.2 Nachführen von Wellenwicklungsdrähten (10) in dem Aufnahmeraum (18) in vertikaler Richtung nach unten;
3.3 Führen der Wellenwicklungsdrähte (10) in dem Aufnahmeraum (18), so dass die Geometrie beibehalten wird;
3.4. Auferlegen einer vertikalen Kraft auf die in dem Aufnahmeraum (18) angeordneten Wellenwicklungsdrähte (10) von oben, um die Wellenwicklungsdrähte (10) nachzuführen und/oder in dem Aufnahmeraum (18) in vertikaler Richtung zu positionieren und/oder gegen eine im unteren Bereich vorgesehene Ablage zu drücken;
3.5 Verwenden eines Schiebers (30), der quer zur Längsrichtung der Wellenwicklungsdrähte (10) verschiebbar ist, als Ablage, um ein ungewolltes Herausfallen von Wellenwicklungsdrähten (10) aus dem Aufnahmeraum (18) zu vermeiden, und/oder als Vereinzelungseinrichtung (29);
3.6 Aktives Einschieben des abzulegenden Wellenwicklungsdrahtes (10) in die Haltestrukturen (24) durch in vertikaler Richtung bewegte Einschiebeelemente (35, 38).

4. Stapelverfahren nach einem der voranstehenden Ansprüche, **dadurch gekennzeichnet, dass** das Positionieren wenigstens einen oder mehrere der Schritte umfasst:
4.1 Positionieren der Haltestruktur (24) in Querrichtung, die sich quer zur Längserstreckung der in dem Aufnahmeraum (18) aufgenommen Wellenwicklungsdrähte (10) erstreckt, an einer relativ zu dem Aufnahmeraum (18) in Querrichtung versetzten Ablageposition (43);
4.2 Positionieren des Werkstückträgers (22) in Längsrichtung, die sich in Richtung der Längserstreckung der in dem Aufnahmeraum (18) aufgenommenen Wellenwicklungsdrähte (10) erstreckt, an einer zu einer vorhergehenden Übergabeposition (23) in Längsrichtung versetzten Übergabeposition;
4.3 Positionieren des Werkstückträgers (22) in vertikaler Richtung in der Übergabeposition (23) derart, dass die Haltestrukturen (22) vertikal mit Führungen (20, 42) des Magazins (14) überlappen.

5. Herstellverfahren zum Herstellen einer Wicklungsmatte (12) für eine Spulenwicklung eines Stators, umfassend Durchführen des Stapelverfahrens nach einem der voranstehenden Ansprüche zum Erhalt eines Stapels aus Wellenwicklungsdrähten (10, 10a-10f), wobei bei dem Stapel auf beiden Seiten Wicklungsköpfe (28a, 28b) angeordnet sind und Prägen des Stapels auf dem Werkstückträger (22) im Bereich der Wicklungsköpfe (28a, 28b).

6. Magazin (14, 14a, 14b) zur Verwendung in dem Stapelverfahren nach einem der voranstehenden Ansprüche, umfassend
einen mäanderförmigen Aufnahmeraum (18) für mehrere gleichartige Wellenwicklungsdrähte (10) mit seitlichen Führungen (20) zum passgenauen verspannungsfreien Führen und seitlichen Positionieren der Wellenwicklungsdrähte (10), so dass die Wellenwicklungsdrähte (10) durch den Aufnahmeraum (18) geführt werden, ohne ihre Geometrie zu verändern, wobei das Magazin (14, 14a. 14b) als Fallmagazin ausgebildet ist, so dass der Aufnahmeraum (18) sich zumindest mit einer Richtungskomponente vertikal durch das Magazin (14, 14a, 14b) erstreckt;
eine Ablageführung (42) zum Ablegen eines Wellenwicklungsdrahts (10) an einer Ablageposition (43), die zu dem Aufnahmeraum (18) in einer Querrichtung, die sich quer zu der Längserstreckung des mäanderförmigen Aufnahmeraums (18) erstreckt, versetzt ist, und eine Aufnahmeausnehmung (52.1, 52.2) zum Aufnehmen eines in das Magazin (14, 14a, 14b) von unten eintauchenden Werkstückträgers (22) mit Haltestruktur (24).

7. Magazin (14, 14a, 14b) nach Anspruch 6, **dadurch gekennzeichnet,**
**dass** der Aufnahmeraum (18) durch eine Begrenzung aus mehreren austauschbaren segmentierten Magazinteilen (14.1, 14.2) gebildet ist.

8. Magazin (14, 14a, 14b) nach Anspruch 6 oder 7, **gekennzeichnet durch**
8.1 eine Vereinzelungseinrichtung (29) zum seitlichen Versetzen des untersten Wellenwicklungsdrahtes (10) von dem Aufnahmeraum (18) zu der Ablageposition (43) mit Krafteinleitungspunkten (62), die zur Beibehaltung der Geometrie des Wellenwicklungsdrahtes (10) ausgebildet sind;
8.2 einen in Querrichtung hin- und her bewegbaren Schieber (30) als Ablage zur Vermeidung eines Herausfallens der Wellenwicklungsdrähte (10) aus dem Aufnahmeraum (18) nach unten und/oder zum Vereinzeln des untersten Wellenwicklungsdrahtes (10) durch seitliches Versetzen von dem Aufnahmeraum (18) zu der Ablageposition (43).

9. Stapelvorrichtung (16) zum Durchführen des Stapelverfahrens nach einem der Ansprüche 1 bis 5, umfassend
wenigstens ein Magazin (14, 14a, 14b) nach einem der Ansprüche 6 bis 8,
wenigstens einen Werkstückträger (22) mit einer Haltestruktur (24) für den Stapel aus abgelegten Wellenwicklungsdrähten (10, 10a-10f),
wenigstens eine Positioniereinrichtung (48) zum relativen Positionieren des Werkstückträgers (22) und des wenigstens einen Magazins (14, 14a, 14b) an vorbestimmten Übergabepositionen (23);
wenigstens eine Bewegungseinrichtung (44) zum relativen Bewegen des Werkstückträgers (22) und des wenigstens einen Magazins (14, 14a, 14b), und
eine Steuerung (46), die dazu eingerichtet ist, die Stapelvorrichtung (16) zum automatischen Durchführen des Stapelverfahrens nach einem der Ansprüche 1 bis 5 anzusteuern.

10. Stapelvorrichtung (16) nach Anspruch 9, **gekennzeichnet durch**
Einschiebeelemente (34, 36, 38) zum aktiven Einschieben des abzulegenden Wellenwicklungsdrahtes (10) in die Haltestruktur (24) und/oder
einen Niederhalter (80) zum Ausüben einer vertikalen Kraft auf die Wellenwicklungsdrähte (10) in dem Aufnahmeraum (18).

11. Stapelvorrichtung (16) nach Anspruch 9 oder 10, **gekennzeichnet durch**
ein erstes Magazin (14a) nach einem der Ansprüche 6 bis 8 zur Aufnahme erster Wellenwicklungsdrähte (10a) und ein zweites Magazin (14b) nach einem der Ansprüche 6 bis 8 mit einem unterschiedlich konturierten Aufnahmeraum (18) zur Aufnahme von zu den ersten Wellenwicklungsdrähten (10a) unterschiedlichen zweiten Wellenwicklungsdrähten (10b), wobei die Bewegungseinrichtung (44) dazu ausgebildet ist, den Werkstückträger (22) zwischen Ablagepositionen (43a, 43b) des ersten und zweiten Magazins (14a, 14b) unter unterschiedlicher Versetzung in Längsrichtung zu bewegen.

12. Steuerung (46) für eine Stapelvorrichtung (16) nach einem der Ansprüche 9 bis 11, wobei die Steuerung (46) dazu ausgebildet ist, die Stapelvorrichtung (16) zum Durchführen des Stapelverfahrens nach einem der Ansprüche 1 bis 5 anzusteuern.

13. Computerprogramm, enthaltend Steueranweisungen, die eine Stapelvorrichtung (16) nach einem der Ansprüche 9 bis 11 veranlassen, das Stapelverfahren nach einem der Ansprüche 1 bis 5 durchzuführen.

14. Herstellvorrichtung (66) zum Herstellen einer Wicklungsmatte (12) für eine Spulenwicklung eines Stators, umfassend eine Stapelvorrichtung (16) nach einem der Ansprüche 9 bis 11 und eine Presse (72), die dazu ausgebildet ist, Wicklungsköpfe (28a, 28b) eines auf dem Werkstückträger (22) gebildeten Stapels von Wellenwicklungsdrähten (10, 10a-10f) auf dem Werkstückträger (22) zu prägen.

## Claims

1. Stacking method for stacking wave winding wires (10, 10a-10f) to form a winding mat (12) for a coil winding of a stator, said stacking method comprising the steps of:
providing at least one magazine (14, 14a, 14b) containing a plurality of similar wave winding wires (10) in a receiving space (18), wherein the magazine (14, 14a, 14b) is designed as a drop magazine such that the receiving space (18) extends, with at least one directional component, in a vertical direction through the magazine (14, 14a, 14b), wherein the contour of the receiving space (18) is adapted to the received wave winding wires (10), so that the wave winding wires (10) are positioned at a plurality of guide devices (20) at different locations of the boundary of the receiving space (18) and are guided through the receiving space (18) without changing their geometry,
positioning a workpiece carrier (22) which is provided with a retaining structure (24) for a winding mat (12) formed of a plurality of stacked wave winding wires (10, 10a-10f) in a first transfer position (23) below the at least one magazine (14, 14a, 14b) and depositing a wave winding wire (10) from the at least one magazine (14, 14a, 14b) at a first position (21.1) on the workpiece carrier,
positioning the workpiece carrier (22) in a second transfer position offset relative to the first transfer position (23) below the at least one magazine (14, 14a, 14b), and depositing a further wave winding wire (10) from the at least one magazine (14, 14a, 14b) at a position (21.2, 21.2, 21.3) offset relative to the first position (21.1) on the workpiece carrier (22).

2. Stacking method according to claim 1, **characterized by**
providing a plurality of magazines (14a, 14b) each containing different shaped wave winding wires (10) with respective receiving spaces (18) adapted thereto,
positioning the workpiece carrier (22) at a first one (14a) of the magazines and depositing a first wave winding wire (10a) from the first magazine (14a) at the first position on the workpiece carrier (22), and positioning the workpiece carrier (22) at a second (14b) of the magazines and depositing a second wave winding wire (10b) from the second magazine (14b) at the second position on the workpiece carrier (22).

3. Stacking method according to any one of the preceding claims, **characterized in that** the depositing comprises at least one or more of the steps:
3.1 separating the lowermost wave winding wire (10a) to be deposited of the magazine (14, 14a, 14b) by means of a separating device (29) which displaces the wave winding wire (10) to be deposited from the receiving space (18) to a depositing position (43), wherein the wave winding wire (10) is retained and/or guided during the displacement in such a way that its geometry is maintained;
3.2 feeding of wave winding wires (10) in the receiving space (18) in a vertical downward direction;
3.3 guiding the wave winding wires (10) in the receiving space (18) so that their geometry is maintained;
3.4 applying a vertical force to the wave winding wires (10) arranged in the receiving space (18) from above in order to guide the wave winding wires (10) and/or to position them in the receiving space (18) in the vertical direction and/or to press them against a support provided in the lower region;
3.5 using a slider (30), which is displaceable transversely to the longitudinal direction of the wave winding wires (10), as a support to prevent wave winding wires (10) from falling out of the receiving space (18) unintentionally, and/or as a separating device (29);
3.6 active insertion of the wave winding wire (10) to be deposited into the retaining structures (24) by means of insertion elements (35, 38) moved in the vertical direction.

4. Stacking method according to any one of the preceding claims, **characterized in that** the positioning comprises at least one or more of the steps:
4.1 positioning the retaining structure (24) in the transverse direction which extends transversely to the longitudinal extension of the wave winding wires (10) received in the receiving space (18) at a depositing position (43) offset in the transverse direction relative to the receiving space (18);
4.2 positioning the workpiece carrier (22) in the longitudinal direction which extends in the direction of the longitudinal extension of the wave winding wires (10) accommodated in the receiving space (18), at a transfer position longitudinally offset relative to a preceding transfer position (23);
4.3 positioning the workpiece carrier (22) in the vertical direction at the transfer position (23) such that the retaining structures (22) overlap vertically with guide devices (20, 42) of the magazine (14).

5. Manufacturing method for manufacturing a winding mat (12) for a coil winding of a stator, the method comprising performing the stacking method according to any one of the preceding claims to obtain a stack of wave winding wires (10, 10a-10f), in which stack winding heads (28a, 28b) are arranged on both sides, and embossing the stack on the workpiece carrier (22) in the region of the winding heads (28a, 28b).

6. Magazine (14, 14a, 14b) for use in the stacking method according to any one of the preceding claims, comprising:
a meander-shaped receiving space (18) for a plurality of similar wave winding wires (10) with lateral guide devices (20) for exactly guiding and laterally positioning the wave winding wires (10) without tensioning, so that the wave winding wires (10) are guided through the receiving space (18) without changing their geometry, wherein the magazine (14, 14a, 14b) is designed as a drop magazine, so that the receiving space (18) extends, with at least one directional component, vertically through the magazine (14, 14a, 14b);
a storage guide device (42) for depositing a wave winding wire (10) at a depositing position (43) offset from the receiving space (18) in a transverse direction extending transversely to the longitudinal extension of the meander-shaped receiving space (18), and a receiving recess (52.1, 52.2) for receiving a workpiece carrier (22) with a retaining structure (24) diving into the magazine (14, 14a, 14b) from below.

7. Magazine (14, 14a, 14b) according to claim 6, **characterized in that**
the receiving space (18) is formed by a boundary from a plurality of exchangeable segmented magazine parts (14.1, 14.2).

8. Magazine (14, 14a, 14b) according to claim 6 or 7, **characterized by**
8.1 a separating device (29) for laterally displacing the lowermost wave winding wire (10) from the receiving space (18) to the depositing position (43) with force application points (62) configured to maintain the geometry of the wave winding wire (10);
8.2 a slider (30) movable to reciprocate in the transverse direction as a support for preventing the wave winding wires (10) from falling out of the receiving space (18) downwards and/or for separating the lowermost wave winding wire (10) by lateral displacement from the receiving space (18) to the depositing position (43).

9. Stacking device (16) for carrying out the stacking method according to any one of claims 1 to 5, comprising:
at least one magazine (14, 14a, 14b) according to any one of claims 6 to 8,
at least one workpiece carrier (22) having a retaining structure (24) for the stack of deposited wave winding wires (10, 10a-10f),
at least one positioning device (48) for relative positioning of the workpiece carrier (22) and the at least one magazine (14, 14a, 14b) at predetermined transfer positions (23);
at least one movement device (44) for relatively moving the workpiece carrier (22) and the at least one magazine (14, 14a, 14b); and
a control unit (46) adapted to control the stacking device (16) for automatically performing the stacking method according to any one of claims 1 to 5.

10. Stacking device (16) according to claim 9, **characterized by**
insertion elements (34, 36, 38) for actively inserting the wave winding wire (10) to be deposited into the retaining structure (24) and/or
a hold-down device (80) for exerting a vertical force on the wave winding wires (10) in the receiving space (18).

11. Stacking device (16) according to claim 9 or 10, **characterized by**
a first magazine (14a) according to any one of claims 6 to 8 for receiving first wave winding wires (10a) and a second magazine (14b) according to any one of claims 6 to 8 having a differently contoured receiving space (18) for receiving second wave winding wires (10b) different from the first wave winding wires (10a), wherein the movement device (44) is designed to move the workpiece carrier (22) between depositing positions (43a, 43b) of the first and second magazines (14a, 14b) with different displacement in the longitudinal direction.

12. Control unit (46) for a stacking device (16) according to any one of claims 9 to 11, wherein the control unit (46) is adapted to control the stacking device (16) to perform the stacking method according to any one of claims 1 to 5.

13. Computer program comprising control instructions for causing a stacking device (16) according to any one of claims 9 to 11 to perform the stacking method according to any one of claims 1 to 5.

14. Manufacturing device (66) for manufacturing a winding mat (12) for a coil winding of a stator, comprising a stacking device (16) according to any one of claims 9 to 11 and a press (72) adapted to emboss, on the workpiece carrier (22), winding heads (28a, 28b) of a stack of wave winding wires (10, 10a-10f) formed on the workpiece carrier (22).

## Revendications

1. Procédé d'empilage de fils d'enroulement ondulés (10, 10a-10f) pour former un tapis d'enroulement (12) pour l'enroulement d'une bobine d'un stator, ledit procédé d'empilage comprenant les étapes suivantes:
fournir au moins un magasin (14, 14a, 14b) contenant une pluralité de fils d'enroulement ondulés similaires (10) dans un espace de réception (18), dans lequel le magasin (14, 14a, 14b) est conçu comme un magasin de chute de sorte que l'espace de réception (18) s'étend, avec au moins une composante directionnelle, dans une direction verticale à travers le magasin (14, 14a, 14b), dans lequel le contour de l'espace de réception (18) est adapté aux fils d'enroulement ondulés reçus (10), de sorte que les fils d'enroulement ondulés (10) sont positionnés sur une pluralité de dispositifs de guidage (20) à différents endroits de la délimitation de l'espace de réception (18) et sont guidés à travers l'espace de réception (18) sans modification de leur géométrie,
positionner un porte-pièce (22) pourvu d'une structure de retenue (24) pour un tapis d'enroulement (12) formé d'une pluralité de fils d'enroulement ondulés empilés (10, 10a-10f) dans une première position de transfert (23) en dessous d'au moins un magasin (14, 14a, 14b) et déposer un fil d'enroulement ondulé (10) dudit au moins un magasin (14, 14a, 14b) à une première position (21.1) sur le porte-pièce, positionner le porte-pièce (22) dans une deuxième position de transfert décalée par rapport à la première position de transfert (23) sous ledit au moins un magasin (14, 14a, 14b), et déposer un autre fil d'enroulement ondulé (10) dudit au mois un magasin (14, 14a, 14b) à une position (21.2, 21.2, 21.3) décalée par rapport à la première position (21.1) sur le porte-pièce (22).

2. Procédé d'empilage selon la revendication 1, **caractérisé par**
fournir une pluralité de magasins (14a, 14b) contenant chacun des fils d'enroulement ondulés (10) de formes différentes avec des espaces de réception respectifs (18) adaptés à ceux-ci,
positionner le porte-pièce (22) sur un premier (14a) des magasins et déposer un premier fil d'enroulement ondulé (10a) du premier magasin (14a) à la première position sur le porte-pièce (22) et positionner le porte-pièce (22) sur un deuxième (14b) des magasins et déposer un deuxième fil d'enroulement ondulé (10b) du deuxième magasin (14b) à la deuxième position sur le porte-pièce (22).

3. Procédé d'empilage selon l'une quelconque des revendications précédentes, **caractérisé en ce que** le dépôt comprend au moins une ou plusieurs des étapes suivantes:
3.1 séparer le fil d'enroulement ondulé (10a) le plus bas à déposer du magasin (14, 14a, 14b) au moyen d'un dispositif de séparation (29) qui déplace le fil d'enroulement ondulé (10) à déposer de l'espace de réception (18) vers une position de dépôt (43), le fil d'enroulement ondulé (10) étant retenu et/ou guidé pendant le déplacement de manière à maintenir sa géométrie;
3.2 alimenter successivement des fils d'enroulement ondulés (10) dans l'espace de réception (18) dans une direction verticale vers le bas;
3.3 guider les fils d'enroulement ondulés (10) dans l'espace de réception (18) de manière à maintenir leur géométrie;
3.4 appliquer une force verticale aux fils d'enroulement ondulés (10) disposés dans l'espace de réception (18) par le haut afin de guider les fils d'enroulement ondulés (10) et/ou de les positionner dans l'espace de réception (18) dans la direction verticale et/ou de les presser contre un support prévu dans la zone inférieure;
3.5 utiliser un poussoir (30), qui peut être déplacé transversalement à la direction longitudinale des fils d'enroulement ondulés (10), comme support pour empêcher les fils d'enroulement ondulés(10) de tomber hors de l'espace de réception (18) de manière involontaire et/ou comme dispositif de séparation (29);
3.6 insérer activement le fil d'enroulement ondulé (10) à déposer dans les structures de retenue (24) au moyen d'éléments d'insertion (35, 38) déplacés dans le sens vertical.

4. Procédé d'empilage selon l'une quelconque des revendications précédentes, **caractérisé en ce que** le positionnement comprend au moins une ou plusieurs des étapes suivantes:
4.1 positionner la structure de retenue (24) dans la direction transversale qui s'étend transversalement à l'extension longitudinale des fils d'enroulement ondulés (10) reçus dans l'espace de réception (18) à une position de dépôt (43) décalée dans la direction transversale par rapport à l'espace de réception (18);
4.2 positionner le porte-pièce (22) dans la direction longitudinale qui s'étend dans la direction de l'extension longitudinale des fils d'enroulement ondulés (10) reçus dans l'espace de réception (18) à une position de transfert décalée longitudinalement par rapport à une position de transfert précédente (23);
4.3. positionner le porte-pièce (22) dans la direction verticale à la position de transfert (23) de telle sorte que les structures de retenue (22) se chevauchent verticalement avec les dispositifs de guidage (20, 42) du magasin (14).

5. Procédé de fabrication d'un tapis d'enroulement (12) pour l'enroulement d'une bobine d'un stator, comprenant l'exécution du procédé d'empilage selon l'une quelconque des revendications précédentes pour obtenir une pile de fils d'enroulement ondulés (10, 10a-10f), dans lequel des têtes d'enroulement en pile (28a, 28b) sont disposées des deux côtés, et le gaufrage de la pile sur le support de pièce (22) dans la zone des têtes d'enroulement (28a, 28b).

6. Magasin (14, 14a, 14b) destiné à être utilisé dans le procédé d'empilage selon l'une quelconque des revendications précédentes, comprenant:
un espace de réception (18) en forme de méandre pour une pluralité de fils d'enroulement ondulés similaires (10) avec des dispositifs de guidage latéraux (20) pour guider exactement et positionner latéralement les fils d'enroulement ondulés (10) sans tension, de sorte que les fils d'enroulement ondulés (10) sont guidés à travers l'espace de réception (18) sans modifier leur géométrie, dans lequel le magasin (14, 14a, 14b) est conçu comme un magasin de chute, de sorte que l'espace de réception (18) s'étend, avec au moins une composante directionnelle, verticalement à travers le magasin (14, 14a, 14b);
un dispositif de guidage de dépôt (42) pour déposer un fil d'enroulement ondulé (10) à une position de dépôt (43) décalée par rapport à l'espace de réception (18) dans une direction transversale s'étendant transversalement à l'extension longitudinale de l'espace de réception en forme de méandre (18), et une cavité de réception (52.1, 52.2) pour recevoir un porte-pièce (22) avec une structure de retenue (24) plongeant dans le magasin (14, 14a, 14b) par le bas.

7. Magasin (14, 14a, 14b) selon la revendication 6, **caractérisé en ce que** l'espace de réception (18) est formé par une délimitation d'une pluralité de parties de magasin segmentées et interchangeables (14.1, 14.2).

8. Magasin (14, 14a, 14b) selon la revendication 6 ou 7, **caractérisé par**
8.1 un dispositif de séparation (29) pour déplacer latéralement le fil d'enroulement le plus bas (10) de l'espace de réception (18) à la position de dépôt (43) avec des points d'application de force (62) configurés pour maintenir la géométrie du fil d'enroulement (10);
8.2 un poussoir (30) mobile dans le sens transversal comme support pour empêcher les fils d'enroulement ondulés(10) de tomber de l'espace de réception (18) vers le bas et/ou pour séparer le fil d'enroulement ondulé le plus bas (10) par déplacement latéral de l'espace de réception (18) vers la position de dépôt (43).

9. Dispositif d'empilage (16) pour la mise en oeuvre du procédé d'empilage selon l'une quelconque des revendications 1 à 5, comprenant:
au moins un magasin (14, 14a, 14b) selon l'une quelconque des revendications 6 à 8,
au moins un porte-pièce (22) comportant une structure de retenue (24) pour la pile de fils d'enroulement ondulés déposée (10, 10a-10f),
au moins un dispositif de positionnement (48) pour le positionnement relatif du porte-pièce (22) et d'au moins un magasin (14, 14a, 14b) à des positions de transfert prédéterminées (23);
au moins un dispositif de déplacement (44) pour déplacer relativement le porte-pièce (22) et au moins un magasin (14, 14a, 14b); et
une unité de commande (46) adaptée pour commander le dispositif d'empilage (16) afin d'exécuter automatiquement le procédé d'empilage selon l'une quelconque des revendications 1 à 5.

10. Dispositif d'empilage (16) selon la revendication 9, **caractérisé par**
des éléments d'insertion (34, 36, 38) pour insérer activement le fil d'enroulement ondulé (10) à déposer dans la structure de retenue (24) et/ou
un abaisseur (80) pour exercer une force verticale sur les fils d'enroulement ondulés (10) dans l'espace de réception (18).

11. Dispositif d'empilage (16) selon la revendication 9 ou 10, **caractérisé par**
un premier magasin (14a) selon l'une quelconque des revendications 6 à 8 pour recevoir les premiers fils d'enroulement ondulés (10a) et un second magasin (14b) selon l'une quelconque des revendications 6 à 8 ayant un espace de réception (18) aux contours différents pour recevoir les seconds fils d'enroulement ondulés (10b) différents des premiers fils d'enroulement à ondes (10a), dans lequel le dispositif de déplacement (44) est conçu pour déplacer le porte-pièce (22) entre les positions de dépôt (43a, 43b) du premier et du second magasin (14a, 14b) avec un déplacement différent dans la direction longitudinale.

12. Unité de commande (46) pour un dispositif d'empilage (16) selon l'une quelconque des revendications 9 à 11, dans laquelle l'unité de commande (46) est adaptée pour commander le dispositif d'empilage (16) afin d'exécuter le procédé d'empilage selon l'une quelconque des revendications 1 à 5.

13. Programme d'ordinateur comprenant des instructions de commande pour amener un dispositif d'empilage (16) selon l'une quelconque des revendications 9 à 11 à exécuter le procédé d'empilage selon l'une quelconque des revendications 1 à 5.

14. Dispositif de fabrication (66) d'un tapis d'enroulement (12) pour le bobinage d'un stator, comprenant un dispositif d'empilage (16) selon l'une quelconque des revendications 9 à 11 et une presse (72) apte à embosser, sur le porte-pièce (22), les têtes d'enroulement (28a, 28b) d'une pile de fils d'enroulement ondulés (10, 10a-10f) formée sur le porte-pièce (22).
